# EUROPEAN PATENT SPECIFICATION

(11) **EP 3 007 053 B1**
(45) Date of publication and mention of the grant of the patent: **01.05.2019**
(21) Application number: 14803601.5
(22) Date of filing: 13.05.2014
(51) Int. Cl.: G06F 3/0485, G06F 3/0488

(54) **INFORMATION PROCESSING APPARATUS, PROCESSING METHOD THEREFOF, AND PROGRAM**
INFORMATIONSVERARBEITUNGSVORRICHTUNG, STEUERUNGSVERFAHREN DAFÜR UND PROGRAMM
DISPOSITIF DE TRAITEMENT D'INFORMATIONS, PROCÉDÉ DE TRAITEMENT ASSOCIÉ, ET PROGRAMME

(30) Priority: 27.05.2013 JP 2013111386
(43) Date of publication of application: 13.04.2016
(73) Proprietor: NEC CORPORATION, Minato-ku, Tokyo 108-8001 (JP)
(72) Inventor: MARUYAMA, Yasunari, Kawasaki-shi, Kanagawa 2118666 (JP)
(74) Representative: Vossius & Partner Patentanwälte Rechtsanwälte mbB
(86) International application number: PCT/JP2014/062709
(87) International publication number: WO 2014/192536

(56) References cited:
- JP-A- 2012 008 625
- JP-A- 2012 014 524
- JP-A- 2013 047 945
- US-A1- 2009 295 743
- US-A1- 2011 001 709
- US-A1- 2011 090 255

## Description

### TECHNICAL FIELD

The present invention relates to an information processing apparatus, a processing method thereof, and a program, and more particularly, to an information processing apparatus for controlling a scroll display according to an operation, a processing method thereof, and a program.

### BACKGROUND ART

In recent years, touch panel type display units capable of detecting a position of an operation such as contact or approach have been generally used as information processing terminals.

Here, it is possible to move display targets displayed on a touch panel type display unit (hereinafter, referred to as a "display unit"), which is capable of detecting a position of an operation such as contact or approach, in order in a scroll direction by a scroll operation of the display unit. It is possible to move the display target until an outer edge of the display target which is a portion hidden without being displayed on the display unit reaches an outer edge of a display range by the scroll operation.

Patent Document 1 discloses an example of a method of scrolling a list or a document in such a touch screen display. In the scrolling method disclosed in Patent Document 1, when the movement of an object such as a finger is detected while the object is detected on the display, an area beyond an edge of the list or the document is displayed by moving the list or the document. After the object is not detected any more on the display, the area beyond the edge of the list or the document is not displayed any more.

Patent Document 1: JP 2010-515978 A
US 2011/001709 A1 relates to methods for displaying and moving data and systems using the same, wherein a first movement of an object on or near a touch-sensitive display unit is detected, and in response to the first movement, data displayed in the touch-sensitive display unit is moved in a first direction.
US 2011/090255 A1 relates to a method and devices which provide a user interface that provides visual cues when a document pan or scroll has reached an end or boundary by distorting the document image in response to further user inputs.

### SUMMARY OF THE INVENTION

### PROBLEMS TO BE SOLVED BY THE INVENTION

In the above-mentioned scrolling method, the area beyond the edge of the list or the document is displayed while an object such as a finger is detected on the display. When the finger or the like is separated from the display, the area beyond the edge of the list or the document is not displayed any more. For example, when a scroll display is performed according to a touch operation using a thumb of a hand that holds a terminal (hereinafter, referred to as a holding hand), an operable range of the thumb on the display is limited. Accordingly, a displayed object for an operation (for example, an icon) is displayed outside the operable range depending on a display content, and thus there is a problem in that an operation cannot be performed by one hand.

The present invention is contrived in view of such situation, and an object thereof is to provide an information processing apparatus, a processing method thereof, and a program which are capable of improving operability for a display target.

### MEANS FOR SOLVING THE PROBLEMS

The above mentioned problems are solved by an information processing apparatus according to claim 1, a processing method according to claim 9 and a computer program according to claim 10. Further aspects of the invention are outlined in the dependent claims. Embodiments which do not fall within the scope of the claims do not describe part of the present invention.

Meanwhile, note that those obtained by converting any combination of the foregoing components and the representation of the present invention between a method, a device, a system, a recording medium, a computer program, and the like are also effective as aspects of the present invention.

In addition, various types of components of the present invention are not necessarily required to be present individually and independently, but a plurality of components may be formed as one member, one component may be formed by a plurality of members, a certain component may be a portion of another component, a portion of a certain component and a portion of another component may be the same as each other, or the like.

In addition, a plurality of procedures are described in order in the processing method and the computer program of the present invention, but the order of the description is not intended to limit the order of the execution of the plurality of procedures. Therefore, when the processing method and the computer program of the present invention are executed, the order of the plurality of procedures can be changed within the range of not causing any problem in terms of the contents.

Further, the plurality of procedures of the processing method and the computer program of the present invention are not limited to be individually executed at timings different from each other. Therefore, another procedure may occur during the execution of a certain procedure, the execution timing of a certain procedure and a portion or all of the execution timings of another procedure may be the same as each other, or the like.

### EFFECTS OF THE INVENTION

According to the present invention, an information processing apparatus, a processing method thereof, and a program which are capable of improving operability for a display target are provided.

### BRIEF DESCRIPTION OF THE DRAWINGS

The above-mentioned objects, other objects, features and advantages will be made clearer from the preferred exemplary embodiments described below, and the following accompanying drawings.

FIG. 1 is a functional block diagram illustrating a configuration of an information processing apparatus according to an exemplary embodiment of the present invention.
FIG. 2 is a flow chart illustrating an example of an operation of the information processing apparatus according to the exemplary embodiment of the present invention.
FIGS. 3 are diagrams illustrating an operation of the information processing apparatus according to the exemplary embodiment of the present invention.
FIG. 4 is a block diagram illustrating a configuration of a smartphone that realizes an information processing apparatus according to an exemplary embodiment of the present invention.
FIGS. 5 are diagrams illustrating a display target in the information processing apparatus according to the exemplary embodiment of the present invention.
FIG. 6 is a flow chart illustrating an example of an operation of the information processing apparatus according to the exemplary embodiment of the present invention.
FIG. 7 is a functional block diagram illustrating a configuration of an information processing apparatus according to an exemplary embodiment of the present invention.
FIG. 8 is a flow chart illustrating an example of an operation of the information processing apparatus according to the exemplary embodiment of the present invention.
FIGS. 9 are diagrams illustrating a predetermined range in the information processing apparatus according to the exemplary embodiment of the present invention.
FIGS. 10 are diagrams illustrating a relationship between an operation with respect to an operation surface of a display unit and a predetermined range in the information processing apparatus according to the exemplary embodiment of the present invention.
FIG. 11 is a functional block diagram illustrating a configuration of an information processing apparatus according to an exemplary embodiment of the present invention.
FIG. 12 is a diagram illustrating a distance of an operation with respect to an operation surface of a display unit in the information processing apparatus according to the exemplary embodiment of the present invention.
FIG. 13 is a flow chart illustrating an example of an operation of the information processing apparatus according to an exemplary embodiment of the present invention.
FIGS. 14 are diagrams illustrating a scroll control in an information processing apparatus according to an exemplary embodiment of the present invention.

### DESCRIPTION OF EXEMPLARY EMBODIMENTS

Hereinafter, exemplary embodiments of the invention will be described with reference to the accompanying drawings. In all the drawings, like elements are referenced by like reference numerals and descriptions thereof will not be repeated.

### (First Exemplary Embodiment)

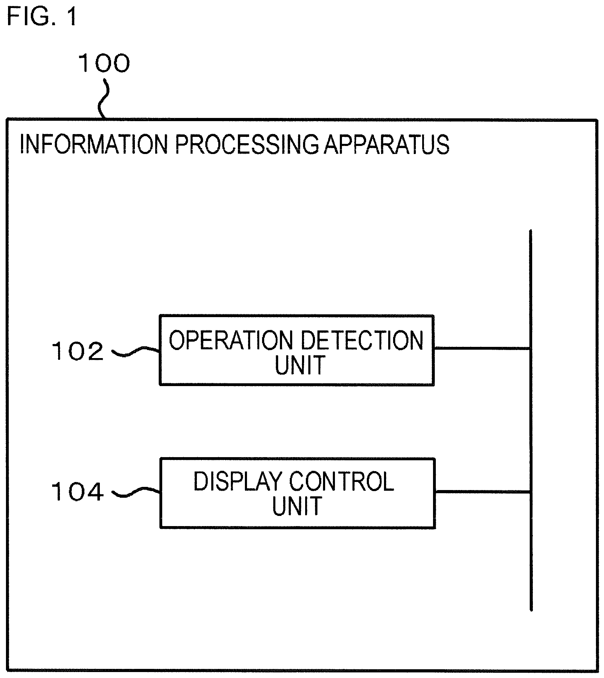

FIG. 1 is a functional block diagram illustrating a configuration of an information processing apparatus 100 according to an exemplary embodiment of the present invention.

The information processing apparatus 100 according to the exemplary embodiment of the present invention includes an operation detection unit 102 that detects an operation with respect to an operation surface of a display unit (not shown) displaying a portion of a display target including a scrollable region scrolled according to an operation, and a display control unit 104 that performs a scroll display for outputting the scrollable region of the display target on a portion-by-portion basis to a scroll display range of the display unit with a movement amount according to the operation detected by the operation detection unit 102. When the operation detection unit 102 detects an operation indicating a movement amount in which an outer edge of the scroll display range of the display unit exceeds the scrollable region, the display control unit 104 switches between the stop of scrolling of the scrollable region so that the outer edge of the scroll display range of the display unit does not exceed the scrollable region and another display other than the display target within the scroll display range of the display unit in addition to the scrollable region, according to whether the operation is a predetermined operation.

Here, the movement amount according to an operation may be expressed by vectors indicating a direction and distance of movement according to the operation. In addition, it is also considered that the movement amount is changed depending on an operation speed and pressure against an operation surface, and the movement amount may be obtained in consideration of an operation speed, operation pressure, and the like (for example, as the speed increases or as the operation pressure increase, a movement distance is increased more than a distance of an operation) in addition to a distance between a starting point of an operation and an end point thereof on a real operation surface. A method of obtaining a movement amount according to an operation is not related to the essence of the present invention, and thus a detailed description thereof will not be repeated.

Meanwhile, constituent elements of the information processing apparatus 100 of the present exemplary embodiment are realized by any combination of hardware and software of any computer including a central processing unit (CPU), a memory, a program for realizing the constituent elements of the drawing which is loaded into the memory, a storage unit such as a hard disk which stores the program, and an interface for network connection. It will be understood by those skilled in the art that there are various modified examples in the realization method thereof and the devices. FIG. 1 shows a block of a functional unit rather than the configuration of a hardware unit.

In the information processing apparatus 100 of the present exemplary embodiment, various types of processing operations corresponding to a computer program according to the exemplary embodiment of the present invention are executed by a computer, and thus various types of units as mentioned above are realized as various types of functions.

The information processing apparatus of the present invention can be applied to a smartphone, a mobile phone, a personal digital assistant (PDA), a tablet terminal, a personal computer, a game machine, an acoustic electronic device, a digital camera, an image display device, other electronic devices, and the like which include the above-mentioned computer. Meanwhile, the information processing apparatus and the display unit may not be integrally formed, and the display device may be connected to the information processing apparatus, and may be controlled by the information processing apparatus.

In addition, the information processing apparatus of the present invention may be realized as one chip or device, or may be realized in a manner of being mounted to another device.

The computer program of the present exemplary embodiment is described as causing a computer for realizing the information processing apparatus 100 to execute a procedure of detecting an operation with respect to an operation surface of a display unit that displays a portion of a display target including a scrollable region scrolled according to an operation, a procedure of controlling the display of the display unit so as to perform a scroll display for outputting the scrollable region of the display target on a portion-by-portion basis to a scroll display range of the display unit with a movement amount according to the operation detected by the procedure of detecting the operation, and a procedure of, when an operation indicating a movement amount in which an outer edge of the scroll display range of the display unit exceeds the scrollable region is detected in the procedure of detecting the operation, switching between the stop of scrolling of the scrollable region so that the outer edge of the scroll display range of the display unit does not exceed the scrollable region and another display other than the display target within the scroll display range of the display unit in addition to the scrollable region according to whether the operation is a predetermined operation, in the procedure of controlling the display.

The computer program of the present invention may be recorded in a computer readable recording medium. The recording medium is considered to have various forms without being particularly limited. In addition, the program may be loaded from the recording medium into a memory of a computer, and may be downloaded in a computer through a network and loaded into a memory.

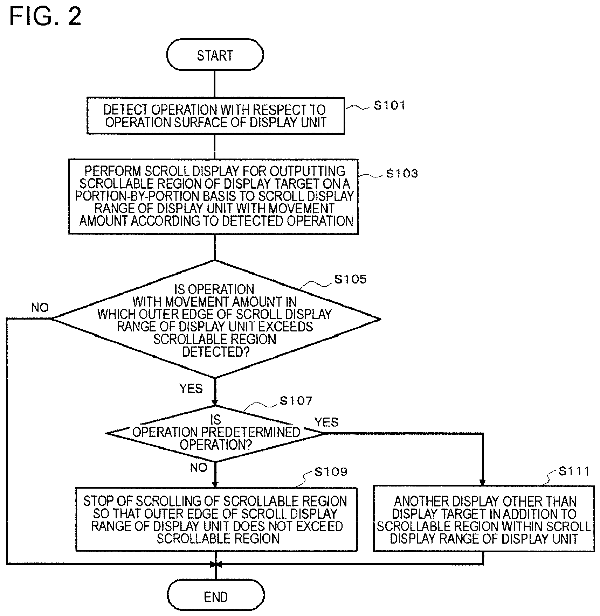

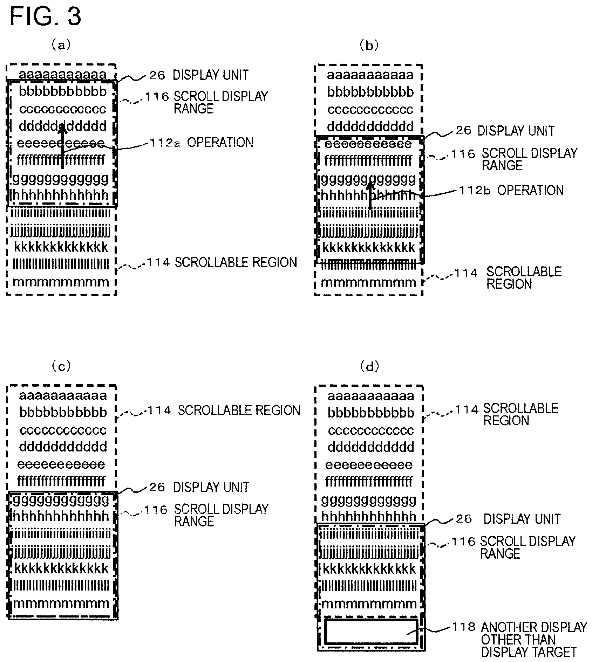

In the above-mentioned configuration, a processing method of the information processing apparatus 100 according to the exemplary embodiment of the present invention will be described below. FIG. 2 is a flow chart illustrating an example of an operation of the information processing apparatus 100 according to the exemplary embodiment of the present invention. FIGS. 3 are diagrams illustrating an operation of the information processing apparatus 100 according to the exemplary embodiment of the present invention.

In the processing method of the information processing apparatus according to the exemplary embodiment of the present invention, the information processing apparatus 100 detects an operation with respect to an operation surface of a display unit that displays a portion of a display target including a scrollable region scrolled according to an operation (step S101), controls a display of the display unit so as to perform a scroll display for outputting the scrollable region of the display target on a portion-by-portion basis to a scroll display range of the display unit with a movement amount according to the detected operation (step S103), and switches, when an operation indicating a movement amount in which an outer edge of the scroll display range of the display unit exceeds the scrollable region is detected (YES in step S105), according to whether the operation is a predetermined operation or not (step S107), between the stop of scrolling of the scrollable region so that the outer edge of the scroll display range of the display unit does not exceed the scrollable region (step S109) and another display 118 other than the display target within the scroll display range of the display unit in addition to the scrollable region (step Sill).

In detail, in step S101, the operation detection unit 102 detects an operation with respect to the operation surface of the display unit that displays a portion of the display target including the scrollable region scrolled according to an operation. Meanwhile, in the processes of step S105 to step Sill, when the process of step S103 is performed, determination (step S105, step S107) is performed so that a scroll display is controlled with a movement amount according to an operation.

The processing procedure in this drawing is started when an operation with respect to an operation surface is detected by the operation detection unit 102. After a series of processing procedures is terminated or while a series of processing procedures is performed, an action may be started in parallel by the detection of an operation independently of a series of processing procedures. Regarding a process in a case where a plurality of operations are detected, it is preferable to appropriately determine priority and conditions according to an application to be applied.

In step S103, for example, as illustrated in FIG. 3(a), the display control unit 104 controls the display of a display unit 26 so as to perform a scroll display for outputting a scrollable region 114 of a display target on a portion-by-portion basis to a scroll display range 116 of the display unit 26 with a movement amount according to an operation 112a detected in step S101. As a result, as illustrated in FIG. 3(b), the scroll display range 116 of the display unit 26 is moved downward.

In step S105, the display control unit 104 may determine whether, for example, the movement amount of the operation detected in step S101 is an amount in which an outer edge of the scroll display range 116 of the display unit 26 exceeds the scrollable region 114. In addition, in step S107, the display control unit 104 may determine whether the operation detected in step S101 is a predetermined operation.

When the operation indicates a movement amount in which the outer edge of the scroll display range 116 of the display unit 26 exceeds the scrollable region 114 (YES in step S105), the display control unit 104 determines whether the operation is a predetermined operation (step S107).

For example, when an operation 112b performed in a state of FIG. 3(b) is not a predetermined operation (NO in step S107), the display control unit 104 performs scrolling halfway with a movement amount according to an operation as illustrated in FIG. 3(c), and stops the scrolling of the scrollable region 114 so that the outer edge of the scroll display range 116 of the display unit 26 does not exceed the scrollable region 114 (step S109). On the other hand, when the operation 112b performed in the state of FIG. 3(b) is a predetermined operation (YES in step S107), the display control unit 104 performs scrolling with a movement amount according to an operation as illustrated in FIG. 3(d), and performs another display 118 other than the display target within the scroll display range 116 of the display unit 26 in addition to the scrollable region 114 (step Sill) .

In step S105, when the outer edge of the scroll display range 116 of the display unit 26 is located within the scrollable region 114 (NO in step S105), the information processing apparatus 100 performs scrolling with a movement amount according to an operation, and then terminates the process.

As described above, according to the information processing apparatus 100 of the exemplary embodiment of the present invention, when an operation indicating a movement amount in which an outer edge of a scroll display range of a display unit exceeds a scrollable region is detected by the operation detection unit 102, switching between the stop of scrolling of the scrollable region so that the outer edge of the scroll display range of the display unit does not exceed the scrollable region and another display other than the display target within the scroll display range of the display unit in addition to the scrollable region is performed according to whether the operation is a predetermined operation, and thus it is possible to improve operability for the display target.

For example, when an operation with respect to the scrollable region of the display target is performed by a predetermined operation (operation by a holding hand (hereinafter, referred to as a holding hand) or the like), it is possible to perform another display other than the display target within a scroll display range of a display unit in addition to the scrollable region. Accordingly, even when an operation target region included in the scrollable region is not in an operable range by a predetermined operation (operation by a holding hand or the like), it is possible to move the operation target region to the operable range, by a predetermined operation (holding hand or the like) . As a result, a predetermined operation (operation by a holding hand or the like) can be performed. On the other hand, in a case where an operation with respect to the scrollable region of the display target is performed by an operation (operation by means other than the holding hand) other than the predetermined operation, even when an operation is performed with a movement amount in which the outer edge of the scroll display range of the display unit exceeds the scrollable region, it is possible to stop scrolling of the scrollable region so that the outer edge of the scroll display range of the display unit does not exceed the scrollable region. Accordingly, for example, a content portion required by a user in the display target does not disappear from a screen of the display unit by scrolling, and thus excellent operability is obtained.

### (Second Exemplary Embodiment)

Hereinafter, a description will be given of an exemplary embodiment in which an information processing apparatus of the present invention is realized by a smartphone 10.

The information processing apparatus according to the exemplary embodiment of the present invention is different from the information processing apparatus 100 of the above-described exemplary embodiment in that a display is switched according to a type of operation. The information processing apparatus according to the exemplary embodiment of the present invention includes an operation detection unit 102 and a display control unit 104 which are the same as those of the information processing apparatus 100 according to the above-described exemplary embodiment of FIG. 1. Hereinafter, a description will be given with reference to FIG. 1.

The information processing apparatus 100 according to the exemplary embodiment of the present invention has the same configuration as that in the above-described exemplary embodiment. Further, the operation detection unit 102 detects a type of operation, and the display control unit 104 determines whether the operation is a predetermined operation on the basis of the type of operation which is detected by the operation detection unit 102 and switches between the stop of an outer edge of a scroll display range of a display unit within a scrollable region and another display 118 other than the display target within the scroll display range of the display unit in addition to the scrollable region.

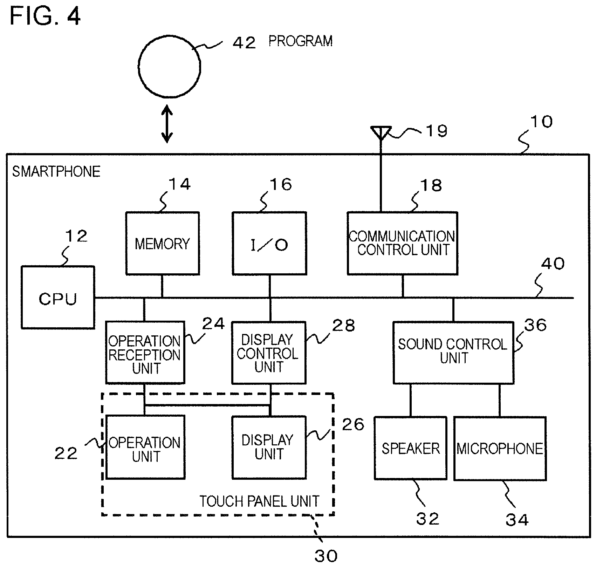

FIG. 4 is a block diagram illustrating a configuration of the smartphone 10 that realizes the information processing apparatus 100 according to the exemplary embodiment of the present invention.

Meanwhile, in the present exemplary embodiment, an example in which the information processing apparatus 100 is realized by the smartphone 10 has been described, but the present invention is not limited thereto. The information processing apparatus 100 may also be applied to, for example, a mobile phone, a PDA, a tablet terminal, a personal computer, a game machine, an acoustic electronic device, a digital camera, an image display device, and other electronic devices, in addition to a smartphone.

As illustrated in FIG. 4, the smartphone 10 of the present exemplary embodiment includes a CPU 12, a memory 14, an input/output (I/O) 16, a communication control unit 18, an operation unit 22, an operation reception unit 24, a display unit 26, a display control unit 28, a speaker 32, a microphone 34, and a sound control unit 36.

The CPU 12 is connected to components of the smartphone 10 through a bus 40, and controls the whole smartphone 10 together with the components. The memory 14 stores a program for operating the smartphone 10 and user data including various types of setting data, application data, and the like which are used when the program is operated and has a region for temporarily storing data such as a work region that is used to operate the program. The I/O 16 controls inputs and outputs between the CPU 12 and components of the smartphone 10 through the bus 40.

In the present exemplary embodiment, the smartphone 10 includes the communication control unit 18 that performs, as a communication unit, wireless LAN communication with another communication device capable of performing local area network (LAN) communication (so-called wireless fidelity (Wi-Fi)) based on the IEEE802.11 series through an antenna 19. Alternatively, the smartphone 10 may communicate with another communication device through a relay station (not shown). In addition, the smartphone 10 may include another communication unit.

The operation unit 22 includes operation keys, operation buttons, switches, a jog dial, a touch pad, a touch panel, and the like. The operation reception unit 24 receives an operation of the operation unit 22 by a user and notifies the CPU 12 of the operation. The display unit 26 includes a light emitting diode (LED) display, a liquid crystal display, an organic electroluminescence (EL) display, and the like. The display control unit 28 performs various screen displays on the display unit 26 according to an instruction from the CPU 12.

In a case of the smartphone 10, at least a portion of the operation unit 22 and the display unit 26 are integrally constituted by a touch panel unit 30.

The sound control unit 36 controls the input and output of a sound to and from the speaker 32, the microphone 34, or an external acoustic device according to an instruction from the CPU 12.

The above-mentioned constituent elements of the information processing apparatus 100 are realized by the CPU 12, the memory 14, a program 42 for implementing the constituent elements of FIG. 1 which are loaded into the memory 14, and any combination of hardware and software of any computer (smartphone 10) including interfaces for network connection (I/O 16). It will be understood to those skilled in the art that there are various modified examples in the realization method thereof and the apparatuses. FIG. 1 and each drawing of a functional block diagram described below shows a block of a logical functional unit rather than the configuration of a hardware unit.

The constituent elements of the information processing apparatus 100 of FIG. 1 may be realized by at least any one software such as an operating system that controls an apparatus such as the smartphone 10 of the present exemplary embodiment, a driver, and an application executed by the smartphone 10, or may be realized by cooperation of hardware constituting the apparatus and the software.

In the information processing apparatus 100 of the present exemplary embodiment, the CPU 12 of the smartphone 10 executes various types of processing operations corresponding to the computer program 42 according to the exemplary embodiment of the present invention, and thus various types of units as mentioned above are realized as various types of functions.

The computer program 42 according to the exemplary embodiment of the present invention is described as causing a computer (the CPU 12 of the smartphone 10) to further execute a procedure of detecting a type of operation, a procedure of determining whether the operation is a predetermined operation on the basis of the detected type of operation, and a procedure of switching between the stop of an outer edge of a scroll display range of the display unit 26 within the scrollable region and another display 118 other than the display target within a scroll display range of the display unit 26 in addition to the scrollable region, in addition to the procedures of the computer program in the above-described exemplary embodiment.

Here, it is possible to move a display range within the scrollable region of a display target displayed in the scroll display range of the display unit 26 of a touch panel unit 30 by an operation with respect to a touch panel type display unit (in the drawing, the display unit 26 of the touch panel unit 30) which is capable of detecting an operation such as contact of an operation body (a hand, a finger, a touch pen, or the like).

For example, a user may trace an operation surface with a finger while browsing the display target displayed on the display unit 26 of the touch panel unit 30 to thereby scroll a content displayed in the scroll display range of the display unit 26 in accordance with the movement (operation) of the finger.

The display control unit 104 displays a scrollable region of a display target in a scroll display range of the display unit with a movement amount according to the detected operation while sequentially scrolling the scrollable region. However, even when movement operations in the same direction are detected after a display range moves to an end of the scrollable region, a state where a display control by the operation cannot be performed is set.

For example, when an operation is performed with respect to an operation surface of the touch panel unit 30 with the thumb of a hand holding the smartphone 10, a range in which an operation can be performed by a thumb with respect to the operation surface of the touch panel unit 30 is limited. For this reason, a displayed object (for example, an image, an icon, or a link) for operation may be displayed outside the operable range according to a display content of the display unit 26 of the touch panel unit 30.

In this case, in a state where a user holds the smartphone 10 with one hand, an operation may be performed by the other hand or finger in many cases.

In this manner, an operation is performed by the other hand or finger rather than being performed by the holding hand, and thus it is necessary to confirm a display content and to change a hand or finger for operation every time, which may result in complexity in the operation.

In the present invention, it is possible to control the movement of a scrollable region displayed in the scroll display range of the display unit 26 of the touch panel unit 30 according to an operation mode (type) by the holding hand and to perform another display 118 other than the display target in addition to the scrollable region in the case of a predetermined operation type, and thus the position of an object displayed for operation within the scrollable region can be moved to an operable range with the thumb of a user's holding hand.

In the present exemplary embodiment, a type of operation is a type such as, for example, flicking or dragging. A predetermined operation is a dragging operation, and an operation other than the predetermined operation is a flicking operation, a swiping operation, or the like. These operation types can be detected by an operating system (OS).

That is, the operation detection unit 102 can acquire information on the operation type from the OS.

Here, each operation will be defined as follows in the present specification.

The term "flicking" used herein refers to an operation of touching a starting point with a finger (operation object) on an operation surface of the touch panel unit 30 and then quickly moving the finger like making a flip toward a direction of an end point. An action in which an end point of an operation is not specified is included in the flicking.

The term "dragging" used herein refers to an operation of moving a finger (operation object) on an operation surface of the touch panel unit 30 while dragging the finger toward an end point from a starting point. An operation of which the starting point and the end point are specified are included in the dragging.

The term "swiping" used herein refers to an operation of moving a finger (operation object) on operation surface of the touch panel unit 30 toward an end point from a starting point like performing stroke. An operation of which a starting point and an end point are not specified are also included in the swiping.

In the case of a flicking operation or a swiping operation, a movement amount of a display target is determined by an operation in accordance with a moving speed, a distance, and the like for which a movement instruction is performed by an operation body, and the display target moves like sliding at a distance longer than the distance for which the movement instruction is performed by the operation body. In the case of a dragging operation, the display target moves little by little by an operation by the distance for which the movement instruction is performed by the operation body.

In the present exemplary embodiment, in the case of a dragging operation (predetermined operation), another display 118 other than the display target is performed within a scroll display range in addition to a scrollable region. In the case of an operation other than a dragging operation, for example, a flicking operation, the operation is stopped so that an outer edge of the scroll display range does not exceed a scrollable region.

Meanwhile, in the present invention, an operation also includes a hover operation that does not make a contact with a screen. The operation also includes an operation using an operation object other than a hand or a finger, for example, a touch pen.

In addition, when an operation is stopped so that the scrollable region is not exceeded, the scrollable region may not necessarily be fixed to a scroll display range of the display unit 26, and a certain degree of movement may be permitted.

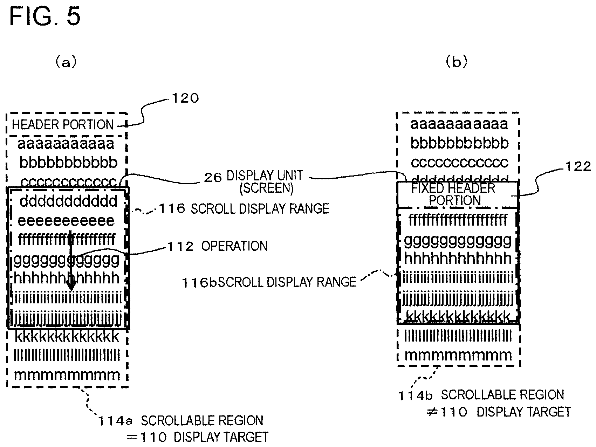

Next, the display target, the scrollable region, and the scroll display range of the present invention will be described with reference to FIGS. 5.

A display target 110 includes a case where an entirety including a header portion 120 is scrolled (FIG. 5(a)) and a case where a fixed menu (fixed header portion 122) is included and a part other than the fixed menu is scrolled (FIG. 5(b)).

In the present invention, examples of the display target 110 include various targets such as a web page, a document file, an image file, and a text file, and are not particularly limited. In addition, an application for displaying the display target 110 is not particularly limited. The part 118 other than the display target (FIG. 3(d)) may include, for example, a mode in which nothing is displayed, a mode in which a scroll display is performed by continuing a head of the display target 110 at a terminus of the display target 110, and the like.

When the entire display target is scrolled (see FIG. 3(a)), the entire display target is a scrollable region 114, and the scrollable region 114 is displayed within the scroll display range 116 of the display unit 26 of the touch panel unit 30. When an operation 112a is performed on the operation surface of the touch panel unit 30, the scrollable region 114 is scrolled within the scroll display range 116. Meanwhile, as illustrated in FIG. 5(a), a menu (header portion 120) which is not fixed is included in the scrollable region 114a, and the entire scrollable region 114a (that is, the entire display target 110) which includes the menu may be scrolled by an operation.

FIG. 5(b) is a diagram illustrating a case where the display target 110 includes a fixed menu (fixed header portion 122) and a part other than the fixed menu is scrolled. A portion of the display target 110 is the fixed menu (fixed header portion 122), the remaining portion thereof is a scrollable region 114b, the fixed menu (fixed header portion 122) is displayed at all times in a portion other than a scroll display range 116b in the display unit 26 of the touch panel unit 30, and only the scrollable region 114b is displayed within the scroll display range 116b of the display unit 26 of the touch panel unit 30. When an operation is performed on the operation surface of the touch panel unit 30, the fixed menu (fixed header portion 122) remains as it is, and only the scrollable region 114b is scrolled within the scroll display range 116b.

Meanwhile, in the present exemplary embodiment, the display target 110 being displayed on the display unit 26 has a rectangular shape, and has four ends of upper, lower, right, and left ends. However, a display shape of the display target 110 is not limited to a rectangular shape, and the positions of the ends and the number of ends are not limited thereto. The shape of the end is not also limited to a linear shape, and may be a curved shape.

Further, in the present exemplary embodiment, a display frame of the display unit 26 has a rectangular shape, and has four edges of upper, lower, right, and left edges. However, the shape of the display frame of the display unit 26 is not limited to a rectangular shape, and the positions of the edges and the number of edges are not limited thereto. The shape of the edge is not also limited to a linear shape, and may be a curved shape.

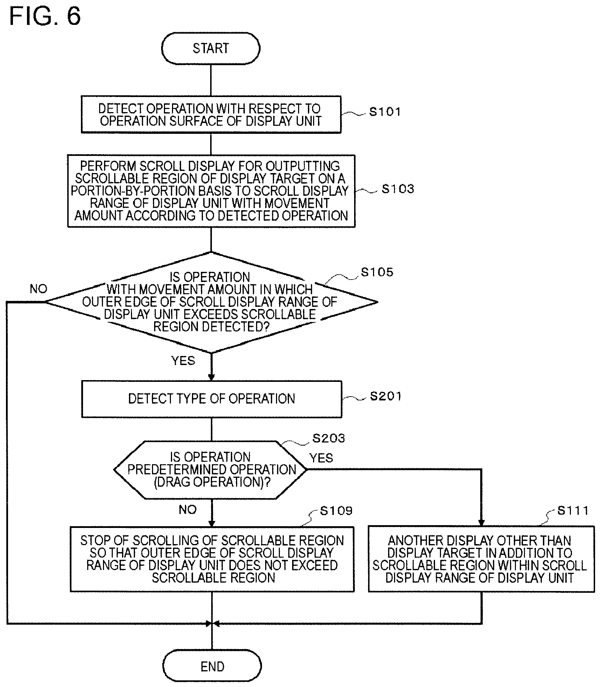

Next, a processing method of the information processing apparatus according to the present exemplary embodiment which is configured in this manner will be described. FIG. 6 is a flow chart illustrating an example of an operation of the information processing apparatus 100 according to the present exemplary embodiment.

The processing method of the information processing apparatus of the present exemplary embodiment is different from that in the above-described exemplary embodiment of FIG. 2 in a method of determining a predetermined operation in step S107 as described below.

In the information processing apparatus according to the exemplary embodiment of the present invention, the operation detection unit 102 detects a type of operation (step S201).

The display control unit 104 determines whether the operation is a predetermined operation or not on the basis of the type of operation which is detected by the operation detection unit 102 (step S203), and switches between the stop of an outer edge of a scroll display range of the display unit 26 within a scrollable region (step S109) and another display 118 other than the display target within the scroll display range of the display unit 26 in addition to the scrollable region (step Sill).

Hereinafter, a detailed description will be given. However, in the present exemplary embodiment, a description of the same operation as that in the above-described exemplary embodiment will not be repeated.

Regarding the operation detected in step S105, the operation detection unit 102 detects a type of operation in step S201. For example, the operation detection unit 102 detects any type such as dragging, flicking, or swiping with respect to the operation 112b performed in the state of FIG. 3(b).

In step S203, the display control unit 104 determines whether the operation 112b detected in step S201 is a predetermined operation or not. In the present exemplary embodiment, the predetermined operation is a dragging operation.

For example, when the detected type of operation is not the predetermined operation (dragging operation) (NO in step S203), the display control unit 104 performs scrolling halfway with a movement amount according to an operation as illustrated in FIG. 3(c), and stops the scrolling of the scrollable region 114 so that the outer edge of the scroll display range 116 of the display unit 26 does not exceed the scrollable region 114 (step S109). On the other hand, when the detected type of operation is the predetermined operation (dragging operation) (YES in step S203), the display control unit 104 performs scrolling with a movement amount according to an operation as illustrated in FIG. 3(d), and performs another display 118 other than the display target within the scroll display range 116 of the display unit 26 in addition to the scrollable region 114 (step Sill).

Thereafter, the information processing apparatus 100 performs scrolling with a movement amount according to an operation, and then terminates the process.

As described above, according to the information processing apparatus of the exemplary embodiment of the present invention, the same effects as those in the above-described exemplary embodiment are exhibited. In particular, in the case of a dragging operation which is a general operation method in the case of a holding hand, another display 118 other than the display target is performed within the scroll display range 116 of the display unit 26 in addition to the scrollable region 114, and thus it is possible to scroll a display content in the scrollable region 114 within the scroll display range 116 of the display unit 26 to a desired position in accordance with a dragging operation. That is, even when an operation target region included in a scrollable region is not in an operable range of a holding hand, it is possible to move the operation target region to the operable range, which allows an operation using a holding hand to be performed.

In addition, in the case of a dragging operation using means other than a holding hand, it is assumed that a user intentionally moves a display content little by little. Accordingly, the intention of a user is more likely to be satisfied in a case where a display content is scrolled with another display 118 other than the display target being displayed without stopping the scrolling of the scrollable region 114 so that an outer edge of the scroll display range 116 of the display unit 26 does not exceed the scrollable region 114, thereby improving the usability thereof.

On the other hand, in the case of an operation such as flicking or swiping which is difficult to perform by a holding hand, even when an operation is performed with a movement amount in which an outer edge of a scroll display range of the display unit 26 exceeds a scrollable region, the scrolling of the scrollable region 114 is stopped so that the outer edge of the scroll display range 116 of the display unit 26 does not exceed the scrollable region 114. Accordingly, for example, a content portion required by a user in the display target does not disappear from a screen of the display unit 26 by scrolling, and thus an excellent operability is obtained.

### (Third Exemplary Embodiment)

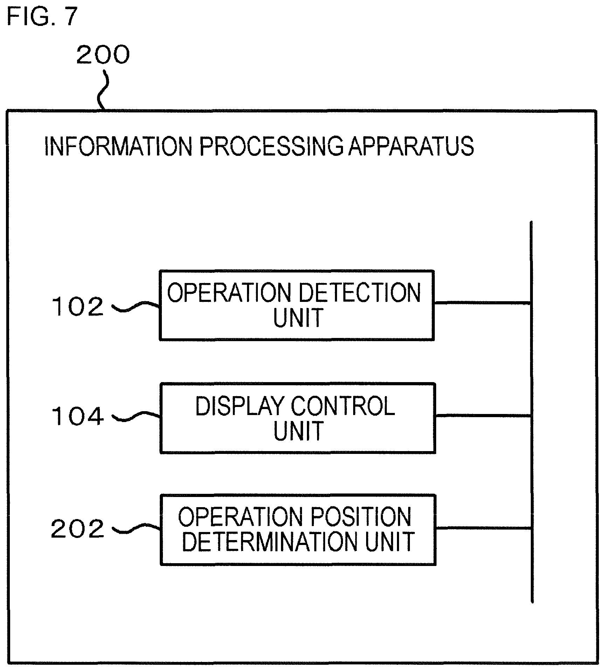

FIG. 7 is a functional block diagram illustrating a configuration of an information processing apparatus 200 according to an exemplary embodiment of the present invention.

The information processing apparatus according to the exemplary embodiment of the present invention is different from that in the above-described exemplary embodiment in that an operation is determined according to whether an operation position (starting point) falls within a predetermined range. The information processing apparatus 200 according to the exemplary embodiment of the present invention includes an operation detection unit 102 and a display control unit 104 which are the same as those of the information processing apparatus 100 in the above-described exemplary embodiment of FIG. 1, and further includes an operation position determination unit 202. Hereinafter, a description will be given with reference to FIG. 7. The information processing apparatus 200 of the present exemplary embodiment may have a configuration obtained by combining the configurations of the information processing apparatuses according to other exemplary embodiments.

The information processing apparatus 200 according to the exemplary embodiment of the present invention further includes the operation position determination unit 202 that determines whether at least a starting point of an operation detected by the operation detection unit 102 falls within a predetermined range or not. When at least the starting point of the operation does not fall within the predetermined range, the display control unit 104 determines that the operation is not a predetermined operation on the basis of a determination result obtained by the operation position determination unit 202. When at least the starting point of the operation falls within the predetermined range, the display control unit determines that the operation is a predetermined operation. When it is determined that the operation is not the predetermined operation, the scrolling of a scrollable region is stopped so that an outer edge of a scroll display range of the display unit 26 does not exceed the scrollable region. When it is determined that the operation is the predetermined operation, another display 118 other than the display target is displayed within the scroll display range of the display unit 26 in addition to the scrollable region.

Meanwhile, a case where a starting point of an operation cannot be obviously specified is also assumed. For example, a point in time when an operation pressure against an operation surface reaches a value equal to or greater than a threshold value may be assumed to be a starting point.

Here, when a smartphone or a tablet terminal is operated, a plurality of cases for a relationship between a hand holding the terminal and an operating hand are assumed as follows.
(a) The terminal is held by one hand, and an operation is performed by the holding hand.
(b) The terminal is held by one hand, and an operation is performed by a hand other than the holding hand.
(c) The terminal is held by both hands, and an operation is performed by both hands (at least one hand).

It is assumed that an operation range on an operation surface of the terminal is different for each case.

In the present invention, the case (a) and the case (c) are equivalent to a predetermined operation. In these cases, the display control unit 104 performs another display 118 other than the display target within the scroll display range of the display unit 26 in addition to the scrollable region. This is because the stop of scrolling of the scrollable region so that the outer edge of the scroll display range of the display unit 26 does not exceed the scrollable region when an operation is performed by a holding hand makes it difficult for a user to operate an operation target located at a position distant from the holding hand.

In addition, the case (b) is equivalent to an operation other than the predetermined operation. In this case, the scrolling of the scrollable region is stopped so that the outer edge of the scroll display range of the display unit 26 does not exceed the scrollable region. When an operation is performed by a hand other than the holding hand, the user is free to operate even when the scrolling of the scrollable region is stopped so that the outer edge of the scroll display range of the display unit 26 does not exceed the scrollable region.

That is, a predetermined operation within a predetermined range which is to be detected in the present invention is the operations in the case (a) and the case (c). For example, the predetermined range may be assumed to be an end region having a predetermined width from ends on the right and left sides in a direction when the terminal is operated on the operation surface of the display unit 26 of the terminal.

The predetermined range may be set to be a range in which any of fingers of a holding hand reaches the operation surface of the display unit 26 when the terminal is held. The predetermined range may be set to be a general operation range according to the shape and size of the display unit 26, the type, shape, size, and weight of the terminal, the type of operation body, and the like, or may be set by learning an operation position of the user.

For example, the operation detection unit 102 can receive an operation with respect to the operation surface of the display unit 26 from an operation with respect to a touch panel (touch panel unit 30) included in the terminal and may detect the position of the received operation, and the like.

The predetermined range varies depending on the orientation of the terminal when the user holds the terminal. For example, in the information processing apparatus 200, the operation detection unit 102 may detect the orientation of the display unit 26 of the terminal, a holding hand (a right hand, a left hand, or both hands), a holding position, or the like using any one of an acceleration sensor (not shown), a gyro sensor (not shown), and a contact sensor (not shown) which are included in the terminal, or a combination thereof.

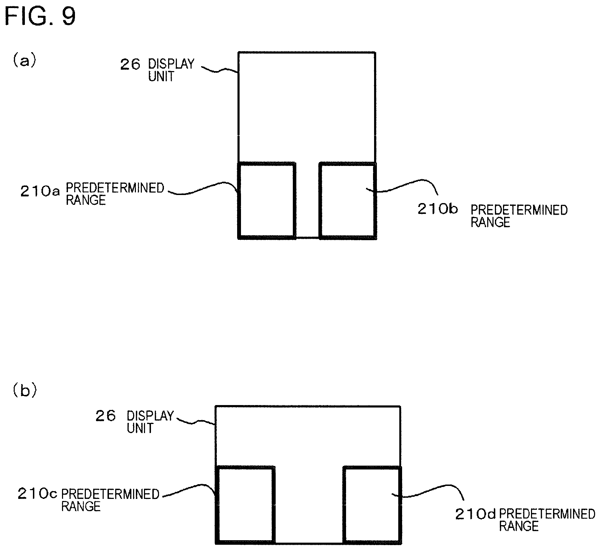

As illustrated in FIG. 9(a), when the display unit 26 of the terminal lies lengthwise, both lower right and left ends of the display unit 26, for example, in a front view of the terminal may be set to be predetermined ranges 210a and 210b, respectively. In addition, when the display unit 26 of the terminal lies sidewise, ranges illustrated in FIG. 9(b) may be set to be predetermined ranges 210c and 210d, respectively.

When any one of a holding hand or a holding position can be specified, a range on the holding hand side of the specified one can be set to be a predetermined range. In addition, when either of the holding hand and the holding position cannot be specified or in a case of holding by both hands, both the holding hand sides may be set to be predetermined ranges.

Meanwhile, in FIGS. 9, a description has been given of a case where a predetermined range 210 is a lower region of the display unit 26. However, for example, the predetermined range may be any of a lower region, a middle region, an upper region, or a combination thereof.

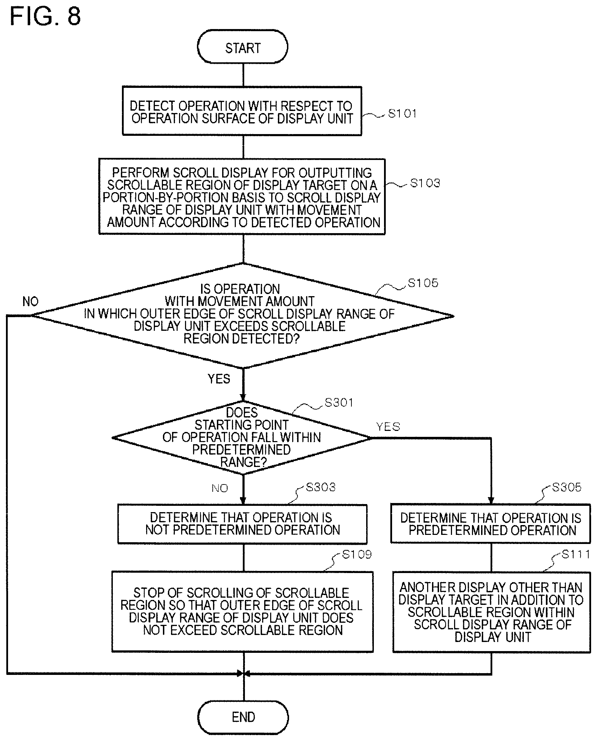

A processing method of the information processing apparatus according to the present exemplary embodiment which is configured in this manner will be described below. FIG. 8 is a flow chart illustrating an example of an operation of the information processing apparatus 200 according to the present exemplary embodiment.

A processing method of the information processing apparatus 200 of the present exemplary embodiment is different from that in the above-described exemplary embodiment of FIG. 2 in that a method of determining a predetermined operation in step S107 as described below.

In the information processing apparatus 200 according to the exemplary embodiment of the present invention, the operation position determination unit 202 further determines whether at least a starting point of an operation detected by the operation detection unit 102 falls within a predetermined range (step S301).

When it is determined that at least the starting point of the operation does not fall within the predetermined range on the basis of a determination result obtained by the operation position determination unit 202, the display control unit 104 determines that the operation is not the predetermined operation (step S303). When it is determined that at least the starting point of the operation falls within the predetermined range, the display control unit determines that the operation is the predetermined operation (step S305).

When it is determined that the operation is not the predetermined operation, the display control unit 104 stops the scrolling of a scrollable region so that an outer edge of a scroll display range of the display unit 26 does not exceed a scrollable region (step S109). When it is determined that the operation is the predetermined operation, the display control unit 104 performs another display 118 other than the display target within the scroll display range of the display unit 26 in addition to the scrollable region (step Sill).

Hereinafter, a detailed description will be given. However, in the present exemplary embodiment, a description of the same operation as that in the above-described exemplary embodiment will not be repeated.

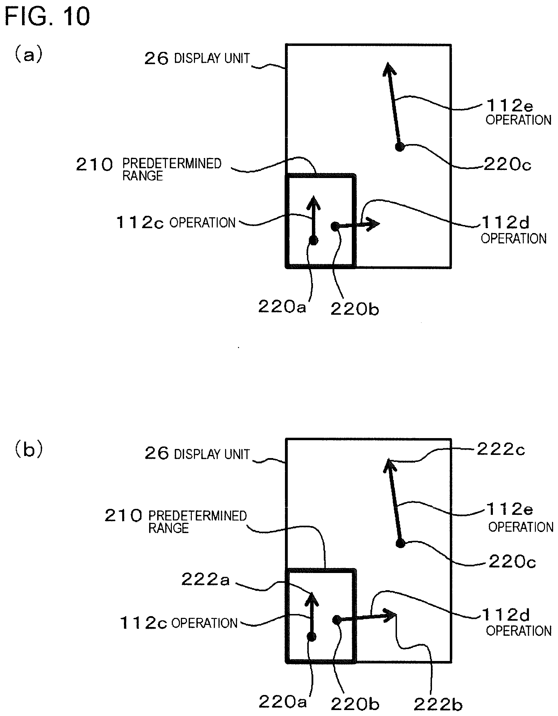

FIGS. 10 are diagrams illustrating a relationship between an operation 112 with respect to an operation surface of the display unit 26 and a predetermined range 210 in the information processing apparatus 200 according to the exemplary embodiment of the present invention.

For example, as illustrated in FIG. 10(a), the operation position determination unit 202 determines that an operation 112c is an operation of which a starting point 220a falls within the predetermined range 210 (YES in step S301). In this case, the display control unit 104 determines that the operation 112c is a predetermined operation (step S305). As illustrated in FIG. 3(d), another display 118 other than the display target is performed within the scroll display range 116 of the display unit 26 in addition to a scrollable region 114 (step S111).

Similarly, the operation position determination unit 202 determines that an operation 112d is an operation of which a starting point 220b falls within the predetermined range 210 (YES in step S301). In this case, the display control unit 104 determines that an operation 112d is also a predetermined operation (step S305). As illustrated in FIG. 3(d), another display 118 other than the display target is performed within the scroll display range 116 of the display unit 26 in addition to the scrollable region 114 (step Sill) .

On the other hand, the operation position determination unit 202 determines that an operation 112e is an operation of which a starting point 220c falls outside the predetermined range 210 (NO in step S301). In this case, the display control unit 104 determines that the operation 112e is not a predetermined operation (step S303). As illustrated in FIG. 3(c), the scrolling of the scrollable region 114 is stopped so that the outer edge of the scroll display range 116 of the display unit 26 does not exceed the scrollable region 114 (step S109).

Meanwhile, FIG. 10(a) shows a case where a lower left region within the display unit 26 is the predetermined range 210. However, as described above, a region other than the lower left region, for example, an upper left region, a lower right region, an upper right region, and a middle region may be the predetermined range. In addition, FIG. 10(a) shows a case where one region within the display unit 26 is the predetermined range 210 on the assumption that an operation is performed by one hand holding. However, two regions within the display unit 26 may be set to be the predetermined range 210 on the assumption that an operation is performed by both hands holding.

In addition, in the present exemplary embodiment, the information processing apparatus 200 may switch displays according to whether an operation position (a starting point and an end point) is completed within the predetermined range 210.

Specifically, in the information processing apparatus 200 of the present exemplary embodiment, the operation position determination unit 202 further determines whether a starting point and an end point of an operation fall within the predetermined range 210. When the starting point and the end point of the operation do not fall within the predetermined range 210, the display control unit 104 determines that the operation is not a predetermined operation on the basis of a determination result obtained by the operation position determination unit 202. When the starting point and the end point of the operation fall within the predetermined range 210, the display control unit determines that the operation is the predetermined operation. When it is determined that the operation is not the predetermined operation, the display control unit 104 stops the scrolling of a scrollable region so that an outer edge of a scroll display range of the display unit 26 does not exceed the scrollable region. When it is determined that the operation is the predetermined operation, the display control unit 104 may perform another display 118 other than the display target within the scroll display range of the display unit 26 in addition to the scrollable region.

In this case, in step S301, the operation position determination unit 202 determines whether a starting point and an end point of an operation detected by the operation detection unit 102 fall within the predetermined range 210. When the starting point and the end point of the operation do not fall within the predetermined range 210, the display control unit 104 determines that the operation is not a predetermined operation on the basis of a determination result obtained by the operation position determination unit 202 (step S303). When the starting point and the end point of the operation fall within the predetermined range 210, the display control unit determines that the operation is the predetermined operation (step S305).

For example, as illustrated in FIG. 10(b), the operation position determination unit 202 determines that the operation 112c is an operation of which the starting point 220a and an end point 222a fall within the predetermined range 210 (YES in step S301). In this case, the display control unit 104 determines that the operation 112c is a predetermined operation (step S305). As illustrated in FIG. 3(d), another display 118 other than the display target is performed within the scroll display range 116 of the display unit 26 in addition to the scrollable region 114 (step S111).

The operation position determination unit 202 determines that the operation 112d is an operation of which the starting point 220b falls within the predetermined range 210 but the end point 222b falls outside the predetermined range (NO in step S301). In this case, the display control unit 104 determines that the operation 112d is not the predetermined operation (step S303). As illustrated in FIG. 3(c), the scrolling of the scrollable region 114 is stopped so that the outer edge of the scroll display range 116 of the display unit 26 does not exceed the scrollable region 114 (step S109).

The operation position determination unit 202 determines that the operation 112e is an operation of which the starting point 220c and an end point 222c fall outside a predetermined range (NO in step S301). In this case, the display control unit 104 determines that the operation 112e is not a predetermined operation (step S303). As illustrated in FIG. 3(c), the scrolling of the scrollable region 114 is stopped so that the outer edge of the scroll display range 116 of the display unit 26 does not exceed the scrollable region 114 (step S109).

In this example, it is determined that the operation 112d determined to be the predetermined operation in the above-mentioned example is not the predetermined operation. Which determination method is adopted may be appropriately selected according to the specifications of a terminal, for example, the shape and size of the display unit 26, the type, shape, size, and weight of the terminal, the type of operation body, an operation method, a method of detecting an operation, and the like.

Meanwhile, a case where a starting point or an end point of the operation 112 cannot be obviously specified is also assumed. For example, a point in time when an operation pressure against an operation surface reaches a value equal to or greater than a threshold value may be assumed to be a starting point. After the starting point is specified, a point in time when the operation pressure against the operation surface reaches a value less than the threshold value may be assumed to be an end point. Alternatively, the end point may be predicted according to an operation speed.

As described above, according to the information processing apparatus 200 of the exemplary embodiment of the present invention, the same effects as those in the above-described exemplary embodiment are exhibited. In particular, determination of whether being a predetermined operation is performed according to whether a starting point (or a starting point and an end point) of an operation falls within a predetermined range. Accordingly, the predetermined operation (holding hand operation) is determined when an operation range falls within a predetermined range in which it is assumed to be operable in the case of an operation by a holding hand, and another display 118 other than the display target is performed within the scroll display range 116 of the display unit 26 in addition to the scrollable region 114, and thus it is possible to scroll a display content in the scrollable region 114 within the scroll display range 116 of the display unit 26 to a desired position in response to a holding hand operation. That is, even when an operation target region included in the scrollable region is not in an operable range by a holding hand, it is possible to move the operation target region to the operable range, by a holding hand operation, which allows an operation to be performed by the holding hand.

In addition, in the case of an operation within a predetermined range which is performed using means other than a holding hand, it is assumed that a user intentionally moves a display content little by little. Accordingly, the intention of a user is more likely to be satisfied in a case where a display content is scrolled with another display 118 other than the display target being performed without stopping the scrolling of the scrollable region 114 so that an outer edge of the scroll display range 116 of the display unit 26 does not exceed the scrollable region 114, thereby improving the usability thereof.

On the other hand, in the case of an operation outside a predetermined range which is difficult to perform by a holding hand, even when an operation is performed with a movement amount in which an outer edge of a scroll display range of the display unit 26 exceeds a scrollable region, the scrolling of the scrollable region 114 is stopped so that the outer edge of the scroll display range 116 of the display unit 26 does not exceed the scrollable region 114. Accordingly, for example, a content portion required by a user in the display target does not disappear from a screen of the display unit 26 by scrolling, and thus an excellent operability is obtained.

### (Fourth Exemplary Embodiment)

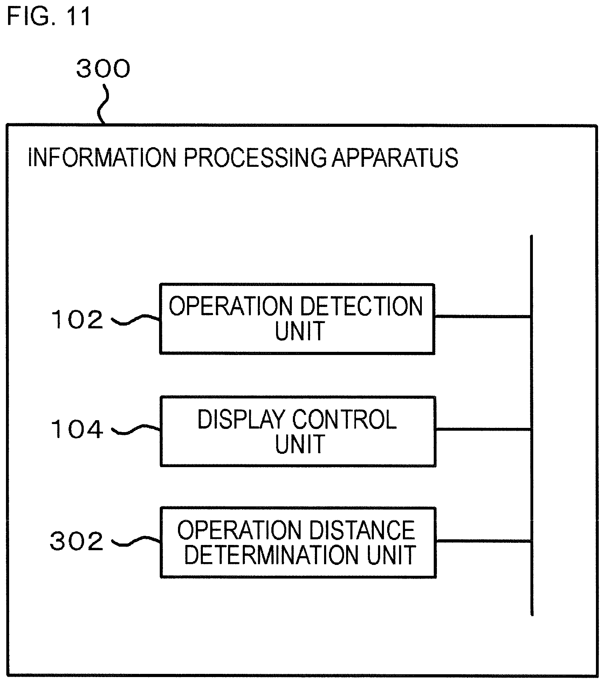

FIG. 11 is a functional block diagram illustrating a configuration of an information processing apparatus 300 according to the exemplary embodiment of the present invention.

The information processing apparatus 300 according to the exemplary embodiment of the present invention is different from that in the above-described exemplary embodiment in that switching displays is performed according to a distance of an operation. The information processing apparatus 300 according to the exemplary embodiment of the present invention includes an operation detection unit 102 and a display control unit 104 which are the same as those of the information processing apparatus 100 in the above-described exemplary embodiment of FIG. 1, and further includes an operation distance determination unit 302. Hereinafter, a description will be given with reference to FIG. 11. The information processing apparatus 300 of the present exemplary embodiment may have a configuration obtained by combining the configurations of the information processing apparatuses according to other exemplary embodiments.

The information processing apparatus 300 according to the exemplary embodiment of the present invention further includes the operation distance determination unit 302 that determines whether a distance of an operation detected by the operation detection unit 102 has a value equal to or less than a predetermined value. When the distance of the operation does not have a value equal to or less than the predetermined value, the display control unit 104 determines that the operation is not a predetermined operation on the basis of a determination result obtained by the operation distance determination unit 302. When the distance of the operation has a value equal to or less than the predetermined value, the display control unit determines that the operation is the predetermined operation. When it is determined that the operation is not the predetermined operation, the display control unit 104 stops the scrolling of a scrollable region so that an outer edge of a scroll display range of a display unit 26 does not exceed a scrollable region. When it is determined that the operation is the predetermined operation, the display control unit 104 performs another display 118 other than the display target within the scroll display range of the display unit 26 in addition to the scrollable region.

In the information processing apparatus 300, for example, the operation detection unit 102 may receive an operation with respect to an operation surface of the display unit 26 from an operation with respect to a touch panel (touch panel unit 30) which is included in a terminal and may detect a distance between a starting point and an end point of the received operation.

Meanwhile, a case where a starting point or an end point of an operation cannot be obviously specified is also assumed. For example, a point in time when an operation pressure against an operation surface reaches a value equal to or greater than a threshold value may be assumed to be a starting point. After the starting point is specified, a point in time when the operation pressure against the operation surface reaches a value less than the threshold value may be assumed to be an end point. Alternatively, the end point may be predicted according to an operation speed. In addition, in the case of a non-contact operation, a range from a point in time (starting point) when a distance between the operation surface and an operation body reaches a value equal to or less than a fixed value to a point in time (end point) when the distance reaches a value equal to or greater than the fixed value may be set as a distance.

Meanwhile, when an operation is not a straight line, a trajectory of the operation may be set to be a distance, or a straight line connecting a starting point and an end point of the operation may be set to be a distance.

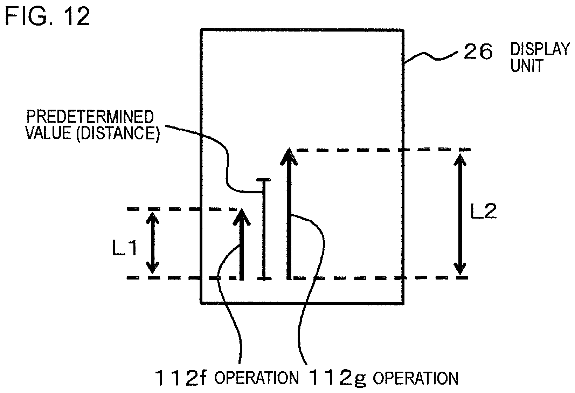

FIG. 12 is a diagram illustrating a distance of an operation 112 with respect to an operation surface of the display unit 26 in the information processing apparatus 300 according to the exemplary embodiment of the present invention.

In general, regarding an operation by a holding hand, the root of an operating finger is fixed, and thus a movable range thereof is restricted, and a distance thereof is reduced compared to an operation by means other than a holding hand. The operation by means other than a holding hand has no restriction on a movable range, and thus it is possible to increase a distance thereof compared to a holding hand operation. In addition, in a case where a user performs an operation of moving a display target little by little while browsing the display target even when the operation is an operation by means other than a holding hand, the operability thereof is not impaired even when another display 118 other than the display target is performed by the operation.

Accordingly, in the present exemplary embodiment, a predetermined value of a distance of an operation may be set in consideration of a movable range in a case of an operation by a holding hand. The predetermined value may be set to be a general operation range according to the shape and size of the display unit 26, the type, shape, size, and weight of the terminal, the type of operation body, and the like, or may be set by learning the habit of a user's operation.

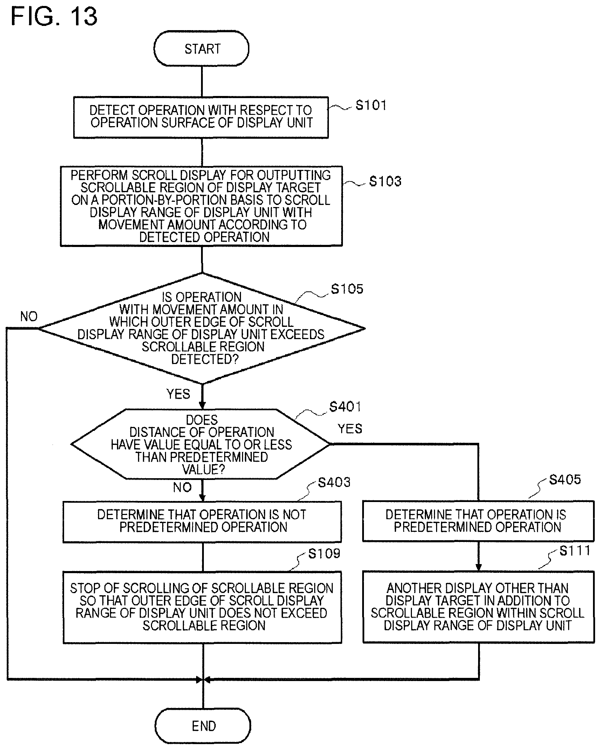

A processing method of the information processing apparatus 300 according to the present exemplary embodiment which is configured in this manner will be described below. FIG. 13 is a flow chart illustrating an example of an operation of the information processing apparatus 300 according to the present exemplary embodiment.

The processing method of the information processing apparatus 300 of the present exemplary embodiment is different from that in the above-described exemplary embodiment of FIG. 2 in that a method of determining a predetermined operation in step S107 as described below.

In the information processing apparatus 300 according to the exemplary embodiment of the present invention, the operation distance determination unit 302 further determines whether or not a distance of an operation detected by the operation detection unit 102 is equal to or less than a predetermined value (step S401).

When the distance of the operation is not equal to or less than the predetermined value (NO in step S401), the display control unit 104 determines that the operation is not the predetermined operation (step S403) on the basis of a determination result obtained by the operation distance determination unit 302. When the distance of the operation is equal to or less than the predetermined value (YES in step S401), the display control unit determines that the operation is the predetermined operation (step S405).

When it is determined that the operation is not the predetermined operation, the display control unit 104 stops the scrolling of a scrollable region so that an outer edge of a scroll display range of the display unit 26 does not exceed a scrollable region (step S109). When it is determined that the operation is the predetermined operation, the display control unit 104 performs another display 118 other than the display target within the scroll display range of the display unit 26 in addition to the scrollable region (step S111).

Hereinafter, a detailed description will be given. However, in the present exemplary embodiment, a description of the same operation as that in the above-described exemplary embodiment will not be repeated.

For example, as illustrated in FIG. 12, it is assumed that an operation 112 (an operation 112f or an operation 112g) with respect to the display unit 26 is detected by the operation detection unit 102. The operation distance determination unit 302 determines whether or not a distance L of the detected operation 112 is equal to or less than a predetermined value. For example, the distance L may be set to be a distance between a starting point and an end point of the operation 112.

The operation distance determination unit 302 determines that a distance L1 of the operation 112f has a value equal to or less than a predetermined value (YES in step S401). In this case, the display control unit 104 determines that the operation 112f is a predetermined operation (step S405). As illustrated in FIG. 3(d), another display 118 other than the display target is performed within the scroll display range 116 of the display unit 26 in addition to the scrollable region 114 (step S111).

The operation distance determination unit 302 determines that a distance L2 of the operation 112g does not have a value equal to or less than the predetermined value (NO in step S401). In this case, the display control unit 104 determines that the operation 112g is not a predetermined operation (step S403). As illustrated in FIG. 3(c), the scrolling of the scrollable region 114 is stopped so that an outer edge of the scroll display range 116 of the display unit 26 does not exceed the scrollable region 114 (step S109).

As described above, according to the information processing apparatus 300 according to the exemplary embodiment of the present invention, the same effects as those in the above-described exemplary embodiment are exhibited. In particular, determination of whether being a predetermined operation is performed according to whether a distance of an operation has a value equal to or less than a predetermined value. Accordingly, when the distance of the operation has a value equal to or less than the predetermined value that is assumed to be a value of an executable distance in the case of the operation by a holding hand, a determination result is a predetermined operation (holding hand operation). Since another display 118 other than the display target is performed within the scroll display range 116 of the display unit 26 in addition to the scrollable region 114, it is possible to scroll a display content in the scrollable region 114 within the scroll display range 116 of the display unit 26 to a desired position, in response to a holding hand operation. That is, even when an operation target region included in a scrollable region is not in an operable range by a holding hand, it is possible to move the operation target region to the operable range, which allows an operation using a holding hand to be performed.

In addition, in the case of an operation, performed by means other than a holding hand, which has a distance being equal to or less than a predetermined value, it is assumed that a user intentionally moves a display content little by little. Accordingly, the intention of a user is more likely to be satisfied in a case where a display content is scrolled with another display 118 other than the display target being performed without stopping the scrolling of the scrollable region 114 so that an outer edge of the scroll display range 116 of the display unit 26 does not exceed the scrollable region 114, thereby improving the usability thereof.

On the other hand, in the case of an operation, having a distance exceeding a predetermined value, which is difficult to perform by a holding hand, even when an operation is performed with a movement amount in which an outer edge of a scroll display range of the display unit 26 exceeds a scrollable region, the scrolling of the scrollable region 114 is stopped so that the outer edge of the scroll display range 116 of the display unit 26 does not exceed the scrollable region 114. Accordingly, for example, a content portion required by a user in the display target does not disappear from a screen of the display unit 26 by scrolling, and thus an excellent operability is obtained.

### (Fifth Exemplary Embodiment)

An information processing apparatus according to an exemplary embodiment of the present invention is different from that in the above-described exemplary embodiment in that a scroll range is controlled in consideration of an operable region. The information processing apparatus according to the exemplary embodiment of the present invention includes an operation detection unit 102 and a display control unit 104 which are the same as those of the information processing apparatus 100 of the above-described exemplary embodiment of FIG. 1. Hereinafter, a description will be given with reference to FIG. 1. The information processing apparatus of the present exemplary embodiment may have a configuration obtained by combining the configurations of the information processing apparatuses according to other exemplary embodiments.

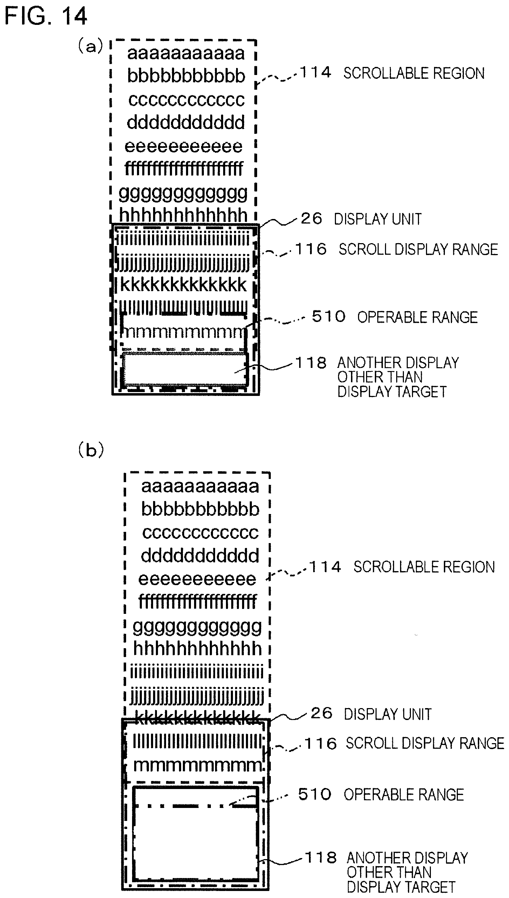

FIGS. 14 are diagrams illustrating a scroll control in the information processing apparatus according to the exemplary embodiment of the present invention.

In the information processing apparatus according to the exemplary embodiment of the present invention, the display control unit 104 performs another display 118 other than the display target which is displayed within a scroll display range 116 in addition to a scrollable region 114 in a range in which the scrollable region 114 remains in a predetermined operable range 510 (two-dot chain line) with respect to an operation surface of a display unit 26.

In the present invention, the operable range 510 refers to a range in which an operation can be performed by a holding hand.

As illustrated in FIG. 14(b), when another display 118 other than the display target is performed so that the scrollable region 114 does not remain within the operable range 510, there is the possibility of a user's hand or finger not reaching an operation target included in the scrollable region 114. Accordingly, in the present exemplary embodiment, as illustrated in FIG. 14(a), another display 118 other than the display target is controlled so that the scrollable region 114 remains within the operable range 510.

The operable range 510 may be specified by being learned from a position of a real movement operation. For example, a range which is determined in advance by assuming a holding position according to the type or shape of a terminal in advance may be set as the operable range.

Further, the display control unit 104 may control scrolling to be performed to the extent that the operation target within the scrollable region 114 is included in the operable range 510, in consideration of the arrangement of the operation target included in the display target.

As described above, according to the information processing apparatus of the exemplary embodiment of the present invention, the same effects as those in the above-described exemplary embodiment are exhibited. Further, when a display content in the scrollable region 114 within the scroll display range 116 of the display unit 26 is scrolled to a desired position according to an operation by a holding hand, the display content is not excessively moved, and an operation with respect to the scrollable region 114 is prevented from being inexecutable, and thus the usability thereof is improved.

As described above, although the exemplary embodiments of the present invention have been set forth with reference to the drawings, they are merely illustrative of the present invention, and various configurations other than those stated above may be adopted.

For example, in an information processing apparatus of another exemplary embodiment, the display control unit 104 may display complementary display information different from a display target in a region 118 other than the display target.

Examples of the different display information include a background image which is set as a background, and the like.

Further, when the display unit 26 has a rectangular shape, the region 118 other than the display target may be provided, for example, at the upper end, the lower end, the left end, and the right end thereof, but different display information may be displayed in each of the regions.

According to such a configuration, the same effects as those in the above-described exemplary embodiment are exhibited, and visual effects and visual entertainment property can also be produced.

Further, in an information processing apparatus of another exemplary embodiment, the display control unit 104 may perform another display 118 other than the display target and then may stop another display 118 other than the display target when an operation detected by the operation detection unit 102 is a predetermined operation, and may perform a return to a display within the scrollable region 114 by performing the operation at least once.

The phrase "predetermined operation" in this case refers to a specific operation such as flicking or tapping, an operation at a predetermined operation position, or the like. A region 118 other than the display target in the display unit 26 is an example of the predetermined operation position.

A predetermined operation for stopping another display 118 other than the display target is not limited to one operation, and the return to the display may be performed in a stepwise manner by performing the operation a plurality of times.

According to such a configuration, the same effects as those in the above-described exemplary embodiment are exhibited. Further, even when another display 118 other than the display target is performed by a predetermined operation, another display 118 other than the display target can be stopped by a simple operation to perform a return to the original display, and thus it is possible to achieve smooth operability.

As mentioned above, although the present invention has been described with reference to the exemplary embodiments and examples, the present invention is not limited to the above-mentioned exemplary embodiments and examples. In the configurations and the details of the present invention, various changes and modifications as may be understood by those skilled in the art can be made within the scope of the appended claims.

## Claims

1. An information processing apparatus (100, 200, 300) comprising:
an operation detection unit (102) that is configured to detect an operation with respect to an operation surface of a display unit (26) that displays a portion of a display target including a scrollable region (114, 114a, 114b) scrolled according to the operation; and
a display control unit (104) that is configured to perform a scroll display for outputting the scrollable region (114, 114a, 114b) of the display target on a portion-by-portion basis to a scroll display range (116) of the display unit (26) with a movement amount according to the operation detected by the operation detection unit (102), wherein when the movement amount according to the detected operation indicates an amount in which an outer edge of the scroll display range (116) of the display unit (26) exceeds the scrollable region(114, 114a, 114b), the display control unit (104) is configured to switch between stop of scrolling of the scrollable region (114, 114a, 114b) so that the outer edge of the scroll display range (116) of the display unit (26) does not exceed the scrollable region (114, 114a, 114b) and display of another display (118) other than the display target within the scroll display range (116) of the display unit (26) in addition to the scrollable region (114, 114a, 114b) without stopping the scrolling of the scrollable region (114, 114a, 114b), according to whether the detected operation is a predetermined operation or not,
wherein the display control unit (104) is configured to determine whether the detected operation is the predetermined operation or not,
when the display control unit (104) determines that the detected operation is the predetermined operation, and when the movement amount according to the detected operation indicates an amount in which the outer edge of the scroll display range (116) of the display unit (26) exceeds the scrollable region (114, 114a, 114b), the display control unit (104) is configured to display the another display (118) other than the display target within the scroll display range (116) of the display unit in addition to the scrollable region (114, 114a, 114b) without stopping the scrolling of the scrollable region (114, 114a, 114b)
and to maintain the displaying of the another display (118) other than the display target after termination of the predetermined operation, and
the display control unit (104) is configured to stop scrolling of the scrollable region (114, 114a, 114b) so that the outer edge of the scroll display range (116) of the display unit (26) does not exceed the scrollable region (114, 114a, 114b), when the display control unit (104) determines that the detected operation is not the predetermined operation and even when the movement amount according to the detected operation indicates an amount in which the outer edge of the scroll display range (116) of the display unit (26) exceeds the scrollable region (114, 114a, 114b).

2. The information processing apparatus (100, 200, 300) according to claim 1,
wherein the operation detection unit (102) is configured to detect a type of operation, and
wherein the display control unit (104) is configured to determine whether the detected operation is the predetermined operation or not on the basis of the type of operation which is detected by the operation detection unit (102).

3. The information processing apparatus (100, 200, 300) according to claim 1, further comprising an operation position determination unit (202) that is configured to determine whether at least a starting point of the detected operation falls within a predetermined range,
wherein the display control unit (104)
is configured to determine that the detected operation is not the predetermined operation when at least the starting point of the detected operation does not fall within the predetermined range on the basis of a determination result obtained by the operation position determination unit (202), and to determine that the detected operation is the predetermined operation when at least the starting point of the detected operation falls within the predetermined range on the basis of the determination result obtained by the operation position determination unit.

4. The information processing apparatus (100, 200, 300) according to claim 3,
wherein the operation position determination unit (202) is further configured to determine whether the starting point and an end point of the detected operation fall within a predetermined range, and
wherein the display control unit (104)
is configured to determine that the detected operation is not the predetermined operation when the starting point and the end point of the detected operation do not fall within the predetermined range on the basis of a determination result obtained by the operation position determination unit (202), and to determine that the detected operation is the predetermined operation when the starting point and the end point of the detected operation fall within the predetermined range on the basis of the determination result obtained by the operation position determination unit (202).

5. The information processing apparatus (100, 200, 300) according to any one of claims 1 to 4, further comprising an operation distance determination unit (302) that is configured to determine whether a distance of the detected operation has a value equal to or less than a predetermined value,
wherein the display control unit (104)
is configured to determine that the detected operation is not the predetermined operation when the distance of the detected operation has a value which is not equal to or less than the predetermined value on the basis of a determination result obtained by the operation distance determination unit (302), and to determine that the detected operation is the predetermined operation when the distance of the detected operation has a value which is equal to or less than the predetermined value on the basis of the determination result obtained by the operation distance determination unit (302).

6. The information processing apparatus according to any one of claims 1 to 5, wherein the display control unit is configured to perform the another display (118) other than the display target, which is displayed within the scroll display range (116) in addition to the scrollable region (114, 114a, 114b), to the extent that the scrollable region (114, 114a, 114b) remains in a predetermined operable range of the operation surface of the display unit.

7. The information processing apparatus (100, 200, 300) according to any one of claims 1 to 6, wherein the display control unit (104) is configured to display display information different from the display target in the another display (118) other than the display target.

8. The information processing apparatus (100, 200, 300) according to any one of claims 1 to 7, wherein the display control unit (104) is configured to perform the another display (118) other than the display target and then to stop the another display (118) other than the display target when the detected operation is another predetermined operation, and to perform a return to a display within the scrollable region (114, 114a, 114b) by performing the another predetermined operation at least once.

9. A processing method of an information processing apparatus (100, 200, 300), the method comprising causing the information processing apparatus (100, 200, 300) to:
detect an operation with respect to an operation surface of a display unit (26) that is configured to display a portion of a display target including a scrollable region (114, 114a, 114b) scrolled according to the operation;
control a display of the display unit (26) so as to perform a scroll display for outputting the scrollable region (114, 114a, 114b) of the display target on a portion-by-portion basis to a scroll display range (116) of the display unit (26) with a movement amount according to the detected operation; wherein the method further comprising causing the information processing apparatus (100, 200, 300) to:
determine whether the detected operation is a predetermined operation or not; and
switch, when the movement amount according to the detected operation indicates an amount in which an outer edge of the scroll display range (116) of the display unit (26) exceeds the scrollable region (114, 114a, 114b), between stop of scrolling of the scrollable region (114, 114a, 114b) so that the outer edge of the scroll display range (116) of the display unit (26) does not exceed the scrollable region (114, 114a, 114b) and displaying another display (118) other than the display target within the scroll display range (116) of the display unit (26) in addition to the scrollable region (114, 114a, 114b) without stopping the scrolling of the scrollable region (114, 114a, 114b), according to whether the detected operation is the predetermined operation or not,
wherein the method comprising causing the information processing apparatus to:
when it is determined that the detected operation is the predetermined operation, and when the movement amount according to the detected operation indicates an amount in which the outer edge of the scroll display range (116) of the display unit (26) exceeds the scrollable region (114, 114a, 114b),
display the another display (118) other than the display target within the scroll display range (116) of the display unit (26) in addition to the scrollable region (114, 114a, 114b) without stopping the scrolling of the scrollable region (114, 114a, 114b) and to maintain the displaying of the another display (118) other than the display target after termination of the predetermined operation, and
stop scrolling of the scrollable region (114, 114a, 114b) so that the outer edge of the scroll display range (116) of the display unit (26) does not exceed the scrollable region (114, 114a, 114b), when it is determined that the detected operation is not the predetermined operation and even when the movement amount according to the detected operation indicates an amount in which the outer edge of the scroll display range (116) of the display unit (26) exceeds the scrollable region (114, 114a, 114b).

10. A computer program comprising instructions which, when the program is executed by a computer, cause the computer to execute:
a procedure of detecting an operation with regard to an operation surface of a display unit (26) that is configured to display a portion of a display target including a scrollable region (114, 114a, 114b) scrolled according to the operation;
a procedure of controlling a display of the display unit (26) so as to perform a scroll display for outputting the scrollable region (114, 114a, 114b) of the display target on a portion-by-portion basis to a scroll display range (116) of the display unit (26) with a movement amount according to the operation detected in the procedure of detecting the operation;
wherein the program further causes the computer to execute:
a procedure of determining whether the detected operation is a predetermined operation or not; and
a procedure of, when the movement amount according to the detected operation indicates an amount in which an outer edge of the scroll display range (116) of the display unit (26) exceeds the scrollable region (114, 114a, 114b) in the procedure of detecting the operation, switching between stop of scrolling of the scrollable region (114, 114a, 114b) so that the outer edge of the scroll display range (116) of the display unit (26) does not exceed the scrollable region (114, 114a, 114b) and displaying another display (118) other than the display target within the scroll display range (116) of the display unit (26) in addition to the scrollable region (114, 114a, 114b) without stopping the scrolling of the scrollable region (114, 114a, 114b), according to whether the detected operation is the predetermined operation or not, in the procedure of controlling the display,
wherein when it is determined that the detected operation is the predetermined operation, and when the movement amount according to the detected operation indicates an amount in which the outer edge of the scroll display range (116) of the display unit (26) exceeds the scrollable region (114, 114a, 114b),
the program causes the computer to execute:
a procedure of displaying the another display (118) other than the display target within the scroll display range (116) of the display unit (26) in addition to the scrollable region (114, 114a, 114b) without stopping the scrolling of the scrollable region (114, 114a, 114b) and to maintain the displaying of the another display (118) other than the display target after termination of the predetermined operation, and
a procedure of stopping scrolling of the scrollable region (114, 114a, 114b) so that the outer edge of the scroll display range (116) of the display unit (26) does not exceed the scrollable region (114, 114a, 114b), when it is determined that the detected operation is not the predetermined operation and even when the movement amount according to the detected operation indicates an amount in which the outer edge of the scroll display range (116) of the display unit (26) exceeds the scrollable region (114, 114a, 114b).

## Patentansprüche

1. Informationsverarbeitungsvorrichtung (100, 200, 300), mit:
einer Betätigungserfassungseinheit (102), die dafür konfiguriert ist, eine Betätigung in Bezug auf eine Bedienoberfläche einer Anzeigeeinheit (26) zu erfassen, die einen Abschnitt eines Anzeigeziels anzeigt, der einen scrollbaren Bereich (114, 114a, 114b) enthält, der gemäß der Betätigung gescrollt wird; und
einer Anzeigesteuereinheit (104), die dafür konfiguriert ist, eine Scroll-Anzeige zum Ausgeben des scrollbaren Bereichs (114, 114a, 114b)des Anzeigeziels auf einer abschnittsweisen Basis an einen Scroll-Anzeigebereich (116) der Anzeigeeinheit (26) mit einem Bewegungsmaß auszuführen, das der durch den Betätigungserfassungseinheit erfassten Betätigung (102) entspricht, wobei
wenn das der erfassten Betätigung entsprechende Bewegungsmaß ein Maß anzeigt, gemäß dem ein äußerer Rand des Scroll-Anzeigebereichs (116) der Anzeigeeinheit (26) den scrollbaren Bereich (114, 114a, 114b) überschreitet, die Anzeigesteuereinheit (104) dafür konfiguriert ist, in Abhängigkeit davon, ob die erfasste Betätigung eine vorgegebene Betätigung ist oder nicht, umzuschalten zwischen einem Stopp des Scrollens des scrollbaren Bereichs (114, 114a, 114b) derart, dass der äußere Rand des Scroll-Anzeigebereichs (116) der Anzeigeeinheit (26) den scrollbaren Bereich (114, 114a, 114b) nicht überschreitet, und einer Darstellung einer anderen Anzeige (118), die vom Anzeigeziel verschieden ist, innerhalb des Scroll-Anzeigebereichs (116) der Anzeigeeinheit (26) zusätzlich zum scrollbaren Bereich (114, 114a, 114b), ohne das Scrollen des scrollbaren Bereichs (114, 114a, 114b) zu stoppen,
wobei die Anzeigesteuereinheit (104) dafür konfiguriert ist, zu bestimmen, ob die erfasste Betätigung die vorgegebene Betätigung ist oder nicht,
wenn die Anzeigesteuereinheit (104) bestimmt, dass die erfasste Betätigung die vorgegebene Betätigung ist, und wenn das der erfassten Betätigung entsprechende Bewegungsmaß ein Maß anzeigt, bei dem der äußere Rand des Scroll-Anzeigebereichs (116) der Anzeigeeinheit (26) den scrollbaren Bereich (114, 114a, 114b) überschreitet, die Anzeigesteuereinheit (104) dafür konfiguriert ist, die vom Anzeigeziel verschiedene andere Anzeige (118) innerhalb des Scroll-Anzeigebereichs (116) der Anzeigeeinheit zusätzlich zum scrollbaren Bereich (114, 114a, 114b) anzuzeigen, ohne das Scrollen des scrollbaren Bereichs (114, 114a, 114b) zu stoppen, und die Darstellung der vom Anzeigeziel verschiedenen anderen Anzeige (118) nach Abschluss der vorgegebenen Betätigung aufrechtzuerhalten, und
die Anzeigesteuereinheit (104) dafür konfiguriert ist, das Scrollen des scrollbaren Bereichs (114, 114a, 114b) zu stoppen, so dass der äußere Rand des Scroll-Anzeigebereichs (116) der Anzeigeeinheit (26) den scrollbaren Bereich (114, 114a, 114b) nicht überschreitet, wenn die Anzeigesteuereinheit (104) bestimmt, dass die erfasste Betätigung nicht die vorgegebene Betätigung ist, und auch dann, wenn das der erfassten Betätigung entsprechende Bewegungsmaß ein Maß anzeigt, gemäß dem der äußere Rand des Scroll-Anzeigebereichs (116) der Anzeigeeinheit (26) den scrollbaren Bereich (114, 114a, 114b) überschreitet.

2. Informationsverarbeitungsvorrichtung (100, 200, 300) nach Anspruch 1, wobei die Betätigungserfassungseinheit (102) dafür konfiguriert ist, einen Typ einer Betätigung zu erfassen, und
wobei die Anzeigesteuereinheit (104) dafür konfiguriert ist, auf der Basis des durch die Betätigungserfassungseinheit (102) erfassten Typs der Betätigung zu bestimmen, ob die erfasste Betätigung die vorgegebene Betätigung ist oder nicht.

3. Informationsverarbeitungsvorrichtung (100, 200, 300) nach Anspruch 1, ferner mit einer Betätigungspositionsbestimmungseinheit (202), die dafür konfiguriert ist, zu bestimmen, ob mindestens ein Startpunkt der erfassten Betätigung innerhalb eines vorgegebenen Bereichs liegt,
wobei die Anzeigesteuereinheit (104) dafür konfiguriert ist, auf der Basis eines durch die Betätigungspositionsbestimmungseinheit (202) erhaltenen Bestimmungsergebnisses zu bestimmen, dass die erfasste Betätigung nicht die vorgegebene Betätigung ist, wenn zumindest der Startpunkt der erfassten Betätigung nicht innerhalb des vorgegebenen Bereichs liegt, und auf der Basis des durch die Betätigungspositionsbestimmungseinheit erhaltenen Bestimmungsergebnisses zu bestimmen, dass die erfasste Betätigung die vorgegebene Betätigung ist, wenn zumindest der Startpunkt der erfassten Betätigung innerhalb des vorgegebenen Bereich liegt.

4. Informationsverarbeitungsvorrichtung (100, 200, 300) nach Anspruch 3,
wobei die Betätigungspositionsbestimmungseinheit (202) ferner dafür konfiguriert ist, zu bestimmen, ob der Startpunkt und ein Endpunkt der erfassten Betätigung innerhalb eines vorgegebenen Bereichs liegen, und
wobei die Anzeigesteuereinheit (104) dafür konfiguriert ist, auf der Basis eines durch die Betätigungspositionsbestimmungseinheit (202) erhaltenen Bestimmungsergebnisses zu bestimmen, dass die erfasste Betätigung nicht die vorgegebene Betätigung ist, wenn der Startpunkt und der Endpunkt der erfassten Betätigung nicht innerhalb des vorgegebenen Bereichs liegen, und auf der Basis des durch die Betätigungspositionsbestimmungseinheit (202) erhaltenen Bestimmungsergebnisses zu bestimmen, dass die erfasste Betätigung die vorgegebene Betätigung ist, wenn der Startpunkt und der Endpunkt der erfassten Betätigung innerhalb des vorgegebenen Bereichs liegen.

5. Informationsverarbeitungsvorrichtung (100, 200, 300) nach einem der Ansprüche 1 bis 4, ferner mit einer Betätigungsbewegungsstreckenbestimmungseinheit (302), die dafür konfiguriert ist, zu bestimmen, ob eine Bewegungsstrecke der erfassten Betätigung einen Wert hat, der kleiner oder gleich einem vorgegebenen Wert ist,
wobei die Anzeigesteuereinheit (104) dafür konfiguriert ist, auf der Basis eines durch die Betätigungsbewegungsstreckenbestimmungseinheit (302) erhaltenen Bestimmungsergebnisses zu bestimmen, dass die erfasste Betätigung nicht die vorgegebene Betätigung ist, wenn die Bewegungstrecke der erfassten Betätigung einen Wert hat, der nicht kleiner oder gleich dem vorgegebenen Wert ist, und auf der Basis eines durch die Betätigungsbewegungsstreckenbestimmungseinheit (302) erhaltenen Bestimmungsergebnisses zu bestimmen, dass die erfasste Betätigung die vorgegebene Betätigung ist, wenn die Bewegungsstrecke der erfassten Betätigung einen Wert hat, der kleiner oder gleich dem vorgegebenen Wert ist.

6. Informationsverarbeitungsvorrichtung nach einem der Ansprüche 1 bis 5, wobei die Anzeigesteuereinheit dafür konfiguriert ist, die vom Anzeigeziel verschiedene andere Anzeige (118), die innerhalb des Scroll-Anzeigebereichs (116) zusätzlich zum scrollbaren Bereich (114, 114a, 114b) angezeigt wird, in einem Maß auszuführen, gemäß dem der scrollbare Bereich (114, 114a, 114b) innerhalb eines vorgegebenen Betätigungsbereichs der Bedienoberfläche der Anzeigeeinheit bleibt.

7. Informationsverarbeitungsvorrichtung (100, 200, 300) nach einem der Ansprüche 1 bis 6, wobei die Anzeigesteuereinheit (104) dafür konfiguriert ist, Anzeigeinformation, die sich vom Anzeigeziel unterscheidet, in der vom Anzeigeziel verschiedenen anderen Anzeige (118) anzuzeigen.

8. Informationsverarbeitungsvorrichtung (100, 200, 300) nach einem der Ansprüche 1 bis 7, wobei die Anzeigesteuereinheit (104) dafür konfiguriert ist, die vom Anzeigeziel verschiedene andere Anzeige (118) auszuführen und dann die vom Anzeigeziel verschiedene andere Anzeige (118) zu stoppen, wenn die erfasste Betätigung eine andere vorgegebene Betätigung ist, und durch mindestens einmaliges Ausführen der anderen vorgegebenen Betätigung zu einer Anzeige innerhalb des scrollbaren Bereichs (114, 114, 114b) zurückzukehren.

9. Verarbeitungsverfahren einer Informationsverarbeitungsvorrichtung (100, 200, 300), wobei das Verfahren die Informationsverarbeitungsvorrichtung (100, 200, 300) veranlasst:
eine Betätigung in Bezug auf eine Bedienoberfläche einer Anzeigeeinheit (26) zu erfassen, die dafür konfiguriert ist, einen Abschnitt eines Anzeigeziels anzuzeigen, der einen scrollbaren Bereich (114, 114a, 114b) enthält, der gemäß der Betätigung gescrollt wird;
eine Anzeige der Anzeigeeinheit (26) zu steuern, um eine Scroll-Anzeige zum Ausgeben des scrollbaren Bereichs (114, 114a, 114b) des Anzeigeziels auf eine abschnittsweise Basis an einen Scroll-Anzeigebereich (116) der Anzeigeeinheit (26) mit einem der erfassten Betätigung entsprechenden Bewegungsmaß auszuführen,
wobei das Verfahren ferner die Informationsverarbeitungsvorrichtung (100, 200, 300) veranlasst:
zu bestimmen, ob die erfasste Betätigung eine vorgegebene Betätigung ist oder nicht; und
wenn das der erfassten Betätigung entsprechende Bewegungsmaß ein Maß anzeigt, gemäß dem ein äußerer Rand des Scroll-Anzeigebereichs (116) der Anzeigeeinheit (26) den scrollbaren Bereich (114, 114a, 114b) überschreitet, umzuschalten zwischen einem Stopp des Scrollvorgangs des scrollbaren Bereichs (114, 114a, 114b), so dass der äußere Rand des Scroll-Anzeigebereichs (116) der Anzeigeeinheit (26) den scrollbaren Bereich (114, 114a, 114b) nicht überschreitet, und einer Darstellung einer vom Anzeigeziel verschiedenen anderen Anzeige (118) innerhalb des Scroll-Anzeigebereichs (116) der Anzeigeeinheit (26) zusätzlich zum scrollbaren Bereich (114, 114, 114b) ohne das Scrollen des scrollbaren Bereichs (114, 114a, 114b) zu stoppen, in Abhängigkeit davon, ob die erfasste Betätigung eine vorgegebene Betätigung ist oder nicht,
wobei das Verfahren die Informationsverarbeitungsvorrichtung ferner veranlasst:
wenn bestimmt wird, dass die erfasste Betätigung die vorgegebene Betätigung ist, und wenn das der erfassten Betätigung entsprechende Bewegungsmaß ein Maß anzeigt, gemäß dem der äußere Rand des Scroll-Anzeigebereichs (116) der Anzeigeeinheit (26) den scrollbaren Bereich (114, 114a, 114b) überschreitet,
die vom Anzeigeziel verschiedene andere Anzeige (118) innerhalb des Scroll-Anzeigebereichs (116) der Anzeigeeinheit (26) zusätzlich zum scrollbaren Bereich (114, 114a, 114b) anzuzeigen, ohne das Scrollen des scrollbaren Bereichs (114, 114a, 114b) zu stoppen, und die Darstellung der vom Anzeigeziel verschiedenen anderen Anzeige (118) nach Abschluss der vorgegebenen Betätigung aufrechtzuerhalten, und
das Scrollen des scrollbaren Bereichs (114, 114a, 114b) zu stoppen, so dass der äußere Rand des Scroll-Anzeigebereichs (116) der Anzeigeeinheit (26) den scrollbaren Bereich (114, 114a, 114b) nicht überschreitet, wenn bestimmt wird, dass die erfasste Betätigung nicht die vorgegebene Betätigung ist, und auch dann, wenn das der erfassten Betätigung entsprechende Bewegungsmaß ein Maß anzeigt, gemäß dem der äußere Rand des Scroll-Anzeigebereichs (116) der Anzeigeeinheit (26) den scrollbaren Bereich (114, 114a, 114b) überschreitet.

10. Computerprogramm mit Anweisungen, die, wenn das Programm durch einen Computer ausgeführt wird, den Computer veranlassen, auszuführen:
eine Prozedur zum Erfassen einer Betätigung in Bezug auf eine Bedienoberfläche einer Anzeigeeinheit (26), die dafür konfiguriert ist, einen Abschnitt eines Anzeigeziels anzuzeigen, der einen scrollbaren Bereich (114, 114a, 114b) enthält, der gemäß der Betätigung gescrollt wird;
eine Prozedur zum Steuern einer Anzeige der Anzeigeeinheit (26), um eine Scroll-Anzeige zum Ausgeben des scrollbaren Bereichs (114, 114a, 114b) des Anzeigeziels auf einer abschnittsweisen Basis an einen Scroll-Anzeigebereich (116) der Anzeigeeinheit (26) mit einem Bewegungsmaß auszuführen, das der in der Prozedur zum Erfassen der Betätigung erfassten Betätigung entspricht,
wobei das Programm ferner den Computer veranlasst, auszuführen:
eine Prozedur zum Bestimmen, ob die erfasste Betätigung eine vorgegebene Betätigung ist oder nicht; und
eine Prozedur, gemäß der, wenn das der erfassten Betätigung entsprechende Bewegungsmaß in der Prozedur zum Erfassen der Betätigung ein Maß anzeigt, gemäß dem ein äußerer Rand des Scroll-Anzeigebereichs (116) der Anzeigeeinheit (26) den scrollbaren Bereich (114, 114a, 114b) überschreitet, in Abhängigkeit davon, ob die erfasste Betätigung in der Prozedur zum Steuern der Anzeige die vorgegebene Betätigung ist oder nicht, zwischen einem Stopp des Scrollvorgangs des scrollbaren Bereichs (114, 114a, 114b), so dass der äußere Rand des Scroll-Anzeigebereichs (116) der Anzeigeeinheit (26) den scrollbaren Bereich (114, 114a, 114b) nicht überschreitet, und einer Darstellung einer vom Anzeigeziel verschiedenen anderen Anzeige (118) innerhalb des Scroll-Anzeigebereichs (116) der Anzeigeeinheit (26) zusätzlich zum scrollbaren Bereich (114, 114a, 114b) umgeschaltet wird, ohne das Scrollen des scrollbaren Bereichs (114, 114a, 114b) zu stoppen,
wobei, wenn bestimmt wird, dass die erfasste Betätigung die vorgegebene Betätigung ist, und wenn das der erfassten Betätigung entsprechende Bewegungsmaß ein Maß anzeigt, gemäß dem der äußere Rand des Scroll-Anzeigebereichs (116) der Anzeigeeinheit (26) den scrollbaren Bereich (114, 114a, 114b) überschreitet,
das Programm den Computer veranlasst, auszuführen:
eine Prozedur zum Darstellen der vom Anzeigeziel verschiedenen anderen Anzeige (118) innerhalb des Scroll-Anzeigebereichs (116) der Anzeigeeinheit (26) zusätzlich zum scrollbaren Bereich (114, 114a, 114b), ohne das Scrollen des scrollbaren Bereichs (114, 114a, 114b) zu stoppen, und zum Aufrechterhalten der Darstellung der vom Anzeigeziel verschiedenen anderen Anzeige (118) nach Abschluss der vorgegebenen Betätigung, und
eine Prozedur zum Stoppen des Scrollens des scrollbaren Bereichs (114, 114a, 114b), so dass der äußere Rand des Scroll-Anzeigebereichs (116) der Anzeigeeinheit (26) den scrollbaren Bereich (114, 114a, 114b) nicht überschreitet, wenn bestimmt wird, dass die erfasste Betätigung nicht die vorgegebene Betätigung ist, und auch dann, wenn das der erfassten Betätigung entsprechende Bewegungsmaß ein Maß anzeigt, gemäß dem der äußere Rand des Scroll-Anzeigebereichs (116) der Anzeigeeinheit (26) den scrollbaren Bereich (114, 114a, 114b) überschreitet.

## Revendications

1. Appareil de traitement d'information (100, 200, 300) comprenant :
une unité de détection d'opération (102) qui est configurée pour détecter une opération relative à une surface d'opération d'une unité d'affichage (26) qui affiche une partie d'une cible d'affichage incluant une région déroulante (114, 114a, 114b) déroulée en fonction de l'opération ; et
une unité de commande d'affichage (104) qui est configurée pour réaliser un affichage déroulant pour sortir la région déroulante (114, 114a, 114b) de la cible d'affichage sur une base partie-par-partie vers une plage d'affichage déroulant (116) de l'unité d'affichage (26) avec une ampleur de mouvement fonction de l'opération détectée par l'unité de détection d'opération (102),
dans lequel
lorsque l'ampleur de mouvement fonction de l'opération détectée indique une ampleur dans laquelle un bord extérieur de la plage d'affichage déroulant (116) de l'unité d'affichage (26) dépasse la région déroulante (114, 114a, 114b), l'unité de commande d'affichage (104) est configurée pour commuter entre arrêt de déroulement de la région déroulante (114, 114a, 114b) de sorte que le bord extérieur de la plage d'affichage déroulant (116) de l'unité d'affichage (26) ne dépasse pas la région déroulante (114, 114a, 114b) et affichage d'un autre affichage (118) autre que la cible d'affichage à l'intérieur de la plage d'affichage déroulant (116) de l'unité d'affichage (26) en complément de la région déroulante (114, 114a, 114b) sans arrêter le déroulement de la région déroulante (114, 114a, 114b), selon que l'opération détectée est une opération prédéterminée ou non,
dans lequel l'unité de commande d'affichage (104) est configurée pour déterminer si l'opération détectée est l'opération prédéterminée ou non,
lorsque l'unité de commande d'affichage (104) détermine que l'opération détectée est l'opération prédéterminée, et lorsque l'ampleur de mouvement fonction de l'opération détectée indique une ampleur dans laquelle le bord extérieur de la plage d'affichage déroulant (116) de l'unité d'affichage (26)dépasse la région déroulante (114, 114a, 114b), l'unité de commande d'affichage (104) est configurée pour afficher l'autre affichage (118) autre que la cible d'affichage à l'intérieur de la plage d'affichage déroulant (116) de l'unité d'affichage en complément de la région déroulante (114, 114a, 114b) sans arrêter le déroulement de la région déroulante (114, 114a, 114b) et pour maintenir l'affichage de l'autre affichage (118) autre que la cible d'affichage après cessation de l'opération prédéterminée, et
l'unité de commande d'affichage (104) est configurée pour arrêter le déroulement de la région déroulante (114, 114a, 114b) de sorte que le bord extérieur de la plage d'affichage déroulant (116) de l'unité d'affichage (26) ne dépasse pas la région déroulante (114, 114a, 114b), lorsque l'unité de commande d'affichage (104) détermine que l'opération détectée n'est pas l'opération prédéterminée et même lorsque l'ampleur de mouvement fonction de l'opération détectée indique une ampleur dans laquelle le bord extérieur de la plage d'affichage déroulant (116) de l'unité d'affichage (26) dépasse la région déroulante (114, 114a, 114b).

2. Appareil de traitement d'information (100, 200, 300) selon la revendication 1,
dans lequel l'unité de détection d'opération (102) est configurée pour détecter un type d'opération, et
dans lequel l'unité de commande d'affichage (104) est configurée pour déterminer si l'opération détectée est l'opération prédéterminée ou non sur la base du type d'opération qui est détecté par l'unité de détection d'opération (102).

3. Appareil de traitement d'information (100, 200, 300) selon la revendication 1, comprenant en outre une unité de détermination de position d'opération (202) qui est configurée pour déterminer si au moins un point de début de l'opération détectée tombe à l'intérieur d'une plage prédéterminée,
dans lequel l'unité de commande d'affichage (104) est configurée pour déterminer que l'opération détectée n'est pas l'opération prédéterminée lorsqu'au moins le point de début de l'opération détectée ne tombe pas à l'intérieur de la plage prédéterminée sur la base d'un résultat de détermination obtenu par l'unité de détermination de position d'opération (202), et pour déterminer que l'opération détectée est l'opération prédéterminée lorsqu'au moins le point de départ de l'opération détectée tombe à l'intérieur de la plage prédéterminée sur la base du résultat de détermination obtenu par l'unité de détermination de position d'opération.

4. Appareil de traitement d'information (100, 200, 300) selon la revendication 3,
dans lequel l'unité de détermination de position d'opération (202) est en outre configurée pour déterminer si le point de début et un point de fin de l'opération détectée tombe à l'intérieur d'une plage prédéterminée, et
dans lequel l'unité de commande d'affichage (104) est configurée pour déterminer que l'opération détectée n'est pas l'opération prédéterminée lorsque le point de début et le point de fin de l'opération détectée ne tombent pas à l'intérieur de la plage prédéterminée sur la base d'un résultat de détermination obtenu par l'unité de détermination de position d'opération (202), et pour déterminer que l'opération détectée est l'opération prédéterminée lorsque le point de début et le point de fin de l'opération détectée tombent à l'intérieur de la plage prédéterminée sur la base du résultat de détermination obtenu par l'unité de détermination de position d'opération (202).

5. Appareil de traitement d'information (100, 200, 300) selon l'une quelconque des revendications 1 à 4, comprenant en outre une unité de détermination de distance d'opération (302) qui est configurée pour déterminer si une distance de l'opération détectée présente une valeur égale ou inférieure à une valeur prédéterminée,
dans lequel l'unité de commande d'affichage (104) est configurée pour déterminer que l'opération détectée n'est pas l'opération prédéterminée lorsque la distance de l'opération détectée présente une valeur qui n'est pas égale ou inférieure à la valeur prédéterminée sur la base d'un résultat de détermination obtenu par l'unité de détermination de distance d'opération (302), et pour déterminer que l'opération détectée est l'opération prédéterminée lorsque la distance de l'opération détectée présente une valeur qui est égale ou inférieure à la valeur prédéterminée sur la base du résultat de détermination obtenu par l'unité de détermination de distance d'opération (302).

6. Appareil de traitement d'information selon l'une quelconque des revendications 1 à 5, dans lequel l'unité de commande d'affichage est configurée pour réaliser l'autre affichage (118) autre que la cible d'affichage, qui est affichée à l'intérieur de la plage d'affichage déroulant (116) en complément de la région déroulante (114, 114a, 114b), dans la mesure où la région déroulante (114, 114a, 114b) demeure dans une plage exploitable de la surface d'opération de l'unité d'affichage.

7. Appareil de traitement d'information (100, 200, 300) selon l'une quelconque des revendications 1 à 6, dans lequel l'unité de commande d'affichage (104) est configurée pour afficher une information d'affichage différente de la cible d'affichage dans l'autre affichage (118) autre que la cible d'affichage.

8. Appareil de traitement d'information (100, 200, 300) selon l'une quelconque des revendications 1 à 7, dans lequel l'unité de commande d'affichage (104) est configurée pour réaliser l'autre affichage (118) autre que la cible d'affichage et ensuite pour arrêter l'autre affichage (118) autre que la cible d'affichage lorsque l'opération détectée est une autre opération prédéterminée, et pour réaliser un retour à un affichage à l'intérieur de la région déroulante (114, 114a, 114b) en réalisant l'autre opération prédéterminée au moins une fois.

9. Procédé de traitement d'un appareil de traitement d'information (100, 200, 300), le procédé comprenant le fait d'amener l'appareil de traitement d'information (100, 200, 300) à :
détecter une opération relative à une surface d'opération d'une unité d'affichage (26) qui est configurée pour afficher une partie d'une cible d'affichage incluant une région déroulante (114, 114a, 114b) déroulée en fonction de l'opération ;
commander un affichage de l'unité d'affichage (26) de manière à réaliser un affichage déroulant pour sortir la région déroulante (114, 114a, 114b) de la cible d'affichage sur une base partie-par-partie vers une plage d'affichage déroulant (116) de l'unité d'affichage (26) avec une ampleur de mouvement fonction de l'opération détectée ;
dans lequel
le procédé comprenant en outre le fait d'amener l'appareil de traitement d'information (100, 200, 300) à :
déterminer si l'opération détectée est une opération prédéterminée ou non ; et
commuter, lorsque l'ampleur de mouvement fonction de l'opération détectée indique une ampleur dans laquelle un bord extérieur de la plage d'affichage déroulant (116) de l'unité d'affichage (26) dépasse la région déroulante (114, 114a, 114b), entre arrêt de déroulement de la région déroulante (114, 114a, 114b) de sorte que le bord extérieur de la plage d'affichage déroulant (116) de l'unité d'affichage (26) ne dépasse pas la région déroulante (114, 114a, 114b) et affichage d'un autre affichage (118) autre que la cible d'affichage à l'intérieur de la plage d'affichage déroulant (116) de l'unité d'affichage (26) en complément de la région déroulante (114, 114a, 114b) sans arrêter le déroulement de la région déroulante (114, 114a, 114b), selon que l'opération détectée est l'opération prédéterminée ou non,
dans lequel le procédé comprenant le fait d'amener l'appareil de traitement d'information à :
lorsqu'il est déterminé que l'opération détectée est l'opération prédéterminée, et lorsque l'ampleur de mouvement fonction de l'opération détectée indique une ampleur dans laquelle le bord extérieur de la plage d'affichage déroulant (116) de l'unité d'affichage (26) dépasse la région déroulante (114, 114a, 114b),
afficher l'autre affichage (118) autre que la cible d'affichage à l'intérieur de la plage d'affichage déroulant (116) de l'unité d'affichage (26) en complément de la région déroulante (114, 114a, 114b) sans arrêter le déroulement de la région déroulante (114, 114a, 114b) et maintenir l'affichage de l'autre affichage (118) autre que la cible d'affichage après cessation de l'opération prédéterminée, et
arrêter le déroulement de la région déroulante (114, 114a, 114b) de sorte que le bord extérieur de la plage d'affichage déroulant (116) de l'unité d'affichage (26) ne dépasse pas la région déroulante (114, 114a, 114b), lorsqu'il est déterminé que l'opération détectée n'est pas l'opération prédéterminée et même lorsque l'ampleur de mouvement fonction de l'opération détectée indique une ampleur dans laquelle le bord extérieur de la plage d'affichage déroulant (116) de l'unité d'affichage (26) dépasse la région déroulante (114, 114a, 114b).

10. Programme d'ordinateur comprenant des instructions qui, lorsque le programme est exécuté par un ordinateur, amènent l'ordinateur à exécuter :
une procédure de détection d'une opération eu égard à une surface d'opération d'une unité d'affichage (26) qui est configurée pour afficher une partie d'une cible d'affichage incluant une région déroulante (114, 114a, 114b) déroulée en fonction de l'opération ;
une procédure de commande d'un affichage de l'unité d'affichage (26) de manière à réaliser un affichage déroulant pour sortir la région déroulante (114, 114a, 114b) de la cible d'affichage sur une base partie-par-partie vers une plage d'affichage déroulant (116) de l'unité d'affichage (26) avec une ampleur de mouvement fonction de l'opération détectée dans la procédure de détection de l'opération ;
dans lequel le programme amène en outre l'ordinateur à exécuter :
une procédure consistant à déterminer si l'opération détectée est une opération prédéterminée ou non ; et
une procédure de, lorsque l'ampleur de mouvement fonction de l'opération détectée indique une ampleur dans laquelle un bord extérieur de la plage d'affichage déroulant (116) de l'unité d'affichage (26) dépasse la région déroulante (114, 114a, 114b) dans la procédure de détection de l'opération, commutation entre arrêt de déroulement de la région déroulante (114, 114a, 114b) de sorte que le bord extérieur de la plage d'affichage déroulant (116) de l'unité d'affichage (26) ne dépasse pas la région déroulante (114, 114a, 114b) et affichage d'un autre affichage (118) autre que la cible d'affichage à l'intérieur de la plage d'affichage déroulant (116) de l'unité d'affichage (26) en complément de la région déroulante (114, 114a, 114b) sans arrêter le déroulement de la région déroulante (114, 114a, 114b), selon que l'opération détectée est l'opération prédéterminée ou non, dans la procédure de commande de l'affichage,
dans lequel lorsqu'il est déterminé que l'opération détectée est l'opération prédéterminée, et lorsque l'ampleur de mouvement fonction de l'opération détectée indique une ampleur dans laquelle le bord extérieur de la plage d'affichage déroulant (116) de l'unité d'affichage (26) dépasse la région déroulante (114, 114a, 114b),
le programme amène l'ordinateur à exécuter :
une procédure d'affichage de l'autre affichage (118) autre que la cible d'affichage à l'intérieur de la plage d'affichage déroulant (116) de l'unité d'affichage (26) en complément de la région déroulante (114, 114a, 114b) sans arrêter le déroulement de la région déroulante (114, 114a, 114b) et de maintien de l'affichage de l'autre affichage (118) autre que la cible d'affichage après cessation de l'opération prédéterminée, et
une procédure d'arrêt du déroulement de la région déroulante (114, 114a, 114b) de sorte que le bord extérieur de la plage d'affichage déroulant (116) de l'unité d'affichage (26) ne dépasse pas la région déroulante (114, 114a, 114b), lorsqu'il est déterminé que l'opération détectée n'est pas l'opération prédéterminée et même lorsque l'ampleur de mouvement fonction de l'opération détectée indique une ampleur dans laquelle le bord extérieur de la plage d'affichage déroulant (116) de l'unité d'affichage (26) dépasse la région déroulante (114, 114a, 114b).
